(19) Europäisches Patentamt
European Patent Office
Office européen des brevets

(11) EP 3 837 066 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**02.09.2026 Patentblatt 2026/36**

(45) Hinweis auf die Patenterteilung:
**29.06.2022 Patentblatt 2022/26**

(21) Anmeldenummer: **19753348.2**

(22) Anmeldetag: **13.08.2019**

(51) Internationale Patentklassifikation (IPC):
***B22C 3/00*** *(2006.01)* ***B22D 13/10*** *(2006.01)*
***B22C 9/06*** *(2006.01)*

(52) Gemeinsame Patentklassifikation (CPC):
**B22C 3/00; B22C 9/06; B22D 13/102**

(86) Internationale Anmeldenummer:
**PCT/EP2019/071659**

(87) Internationale Veröffentlichungsnummer:
**WO 2020/035474 (20.02.2020 Gazette 2020/08)**

(54) **SCHLICHTEZUSAMMENSETZUNG, VERWENDUNG DER SCHLICHTEZUSAMMENSETZUNG UND ENTSPRECHENDES VERFAHREN ZUR HERSTELLUNG EINER SCHLEUDERGUSSKOKILLE MIT EINEM SCHLICHTEÜBERZUG**

COATING COMPOSITION, USE OF THE COATING COMPOSITION AND CORRESPONDING METHOD FOR PRODUCING A CENTRIFUGAL CASTING MOULD WITH A COATING

COMPOSITION DE POTEYAGE, UTILISATION DE LA COMPOSITION DE POTEYAGE ET PROCÉDÉ CORRESPONDANT DE FABRICATION D’UNE COQUILLE DE COULÉE CENTRIFUGE POURVUE D’UN REVÊTEMENT DE POTEYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2018 DE 102018119635**
**11.12.2018 DE 102018131811**

(43) Veröffentlichungstag der Anmeldung:
**23.06.2021 Patentblatt 2021/25**

(73) Patentinhaber: **HÜTTENES-ALBERTUS Chemische Werke Gesellschaft mit beschränkter Haftung**
**40549 Düsseldorf (DE)**

(72) Erfinder:
- **HENNIG, Sven**
  **30890 Barsinghausen (DE)**
- **JATTKE, Andreas**
  **30457 Hannover (DE)**
- **SEEGER, Klaus**
  **30171 Hannover (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 0 246 181**
**WO-A1-2008/118023**
**WO-A1-2016/091249**
**DE-A1- 1 571 607**
**DE-A1- 102006 002 246**
**DE-A1- 102013 113 439**
**DE-A1- 102017 107 655**
**DE-A1- 102017 107 658**
**GB-A- 722 459**
**GB-A- 865 301**
**US-A- 2 623 809**
**US-A- 4 297 309**
**US-A1- 2008 115 691**
**US-B1- 6 540 013**

- **Oliver Heiri, Andre F. Lotter & Gerry Lemcke: "Loss on ignition as a method for estimating organic and carbonate content in Sediments:reproducibility and comparability of results”; Journal of Paleolimnology, 2001 volume 25, pages 101-110**
- **H.E. Bergna "The Colloid Chemistry of Silica”, Adv. Chern. Ser. 234,American Chemical Society, Washingon D.C., 1994, Seiten 1-47**
- **R. K. Iler: "The Chemistry of Silica, Solubility, Polymerization, Colloid and Surface Proper-ties and Biochemistry of Silica”, 1979, Wiley &Sons Ltd, Inhaltsverzeichnis, Ausschnitt aus "Chapter4”, Seiten 313-363 und Ausschnitt aus "Chapter 5, Seiten S.462-513**
- **Nathan Janco: "Centrifugal Casting”, American Foundrymens Society (1. Juni 1988), Titel, Inhaltsangabe und Chapter 1 (S. 1-6), Chapter 6 (S. 33-38) und Chapter 13 (S. 65 ff.)**

EP 3 837 066 B2

## Beschreibung

Die vorliegende Erfindung betrifft die Verwendung einer Schlichtezusammensetzung mit einem Feststoffanteil von mehr als 69 Gew.-% (bezogen auf die Gesamtmasse der Schlichtezusammensetzung) und mit einem Glühverlust von weniger als 0,6 Gew.-% (bezogen auf die Gesamtmasse des Feststoffanteils der Schlichtezusammensetzung) zur Herstellung eines Schlichteüberzugs auf der Innenwandung einer Schleudergusskokille mittels eines Sprühauftrags. Die vorliegende Erfindung betrifft zudem ein Verfahren zur Herstellung einer innenwandig mit einem Schlichteüberzug versehenen Schleudergusskokille zur Verwendung im Schleudergussverfahren sowie ein Verfahren zur Herstellung eines Gussstücks im Schleudergussverfahren, vorzugsweise mit einer strukturierten Oberfläche. Die vorliegende Erfindung betrifft ebenfalls eine Schleudergusskokille zur Verwendung im Schleudergussverfahren, mit einem Schlichteüberzug auf der Innenwandung der Schleudergusskokille.

Die vorliegende Erfindung ist in den beigefügten Ansprüchen definiert.

Im Gegensatz zu Sandgießverfahren, bei denen die Gießformen nach dem Abguss zur Gussteilentnahme zerstört werden, können metallische Dauerformen (Kokillen), beispielsweise gefertigt aus Gusseisen oder Stahl, nach der Entnahme des Gussteils wieder für den nächsten Abguss genutzt werden. Auch größere Serien lassen sich so wirtschaftlich fertigen. Neben einfachen Geometrien, wie z. B. Quadern oder Büchsen, können durch den Einsatz von Kokillenschiebern, Einlegeteilen und Sandkernen auch komplizierte Geometrien im Kokillenguss hergestellt werden.

Beim Kokillengießen wird zwischen verschiedenen Kokillengießverfahren unterschieden. Das einfachste und zugleich gebräuchlichste Kokillengießverfahren stellt dabei das Schwerkraftkokillengießen dar, bei welchem die Metallschmelze mit Hilfe der Schwerkraft in die entsprechende Kokille gefüllt und das fertige Formteil der zumeist zwei- bzw. mehrteiligen Kokille nach erfolgter Erstarrung und Abkühlung entnommen wird. Bei dieser Art des Kokillengießverfahrens muss insbesondere während der Konstruktion der einzusetzenden Kokille darauf geachtet werden, dass das flüssige Metall alle Formbereiche füllt, bevor in den vom Einguss entfernten und dünnwandigen Partien die Erstarrung einsetzt, da ansonsten die Entstehung von Gussfehlern in Form von bei der Erstarrung entstandener Hohlräume (sogenannter Lunker) droht.

Ein besonderes Verfahren im Bereich des Kokillengießens stellt das Schleudergussverfahren dar. Beim Schleudergussverfahren wird die Metallschmelze üblicherweise über eine Gießrinne in eine um ihre Mittelachse rotierende Metallkokille gefüllt und durch die Zentrifugalkraft gleichmäßig (gasfrei, ohne Lunker und Schlackeneinschlüsse) an die Kokillenwand gepresst. Unter der Wirkung der Fliehkräfte erstarrt das flüssige Metall und bildet ein sehr reines und hochverdichtetes Gefüge aus. Für die Darstellung des Hohlraumes sind beim Schleudergussverfahren keine Kerne erforderlich. Unter Einwirkung der Zentrifugalkraft entsteht ein zylindrischer Hohlkörper (z. B. ein Rohr, Ring oder dergleichen), dessen Wanddicke durch die zugeführte Metallmenge bestimmt wird. Der entstandene Rohling (Hohlkörper) wird nach dem Erstarren aus der Kokille (auch als Schleudergusskokille bezeichnet) gezogen und der weiteren Bearbeitung zugeführt.

Üblicherweise werden, insbesondere beim Stahl- und Eisenguss, die Oberflächen von Gie-ßereiformkörpern mit einem Überzug (auch als Schlichteüberzug bezeichnet) beschichtet, insbesondere diejenigen Oberflächen, die mit gegossenem Metall in Berührung kommen. Schlichteüberzüge bilden hier eine Grenz- oder Sperrschicht zwischen Form und Metall, u.a. zur gezielten Unterdrückung von Fehlermechanismen an diesen Stellen oder zur Nutzung metallurgischer Effekte. Allgemein sollen Schlichteüberzüge in der Gießereitechnik vor allem folgende, dem Fachmann bekannte, Funktionen erfüllen:

- Möglichst vollständige Trennung von flüssigem Metall und Form;
- Vermeidung von chemischen Reaktionen zwischen Bestandteilen von Form und Schmelze, dadurch Erleichterung der Trennung zwischen Form und Gussstück und/oder
- Vermeidung von Oberflächenfehlern am Gussstück.

An Schlichteüberzüge, welche im Schleudergussverfahren Einsatz finden, werden im Rahmen der vorliegenden Erfindung zudem regelmäßig die folgenden spezifischen Anforderungen gestellt:

- Hohe Isolierwirkung;
- Schnelle Trocknungsgeschwindigkeit;
- Geringe Gasentwicklung während des Gussvorganges;
- Hohes Gasaufnahmevermögen (beim Einsatz von nicht-entlüfteten Schleudergusskokillen);

- Realisierung einer einfachen Trennung von Gussstück und Schleudergusskokille nach erfolgtem Gussvorgang (gutes Ziehverhalten) und/oder

- Beeinflussung bzw. Vorgabe der Oberflächenstruktur des Gussstückes.

Ein wichtiger Faktor für die Gefügeausbildung und den Härteverlauf von insbesondere im Schleudergussverfahren hergestellten Gussstücken ist die Isolierwirkung des Schlichteüberzuges. Eine hohe Isolierwirkung resultiert in einem verlangsamten Wärmeübergang vom flüssigen Metall auf die Schleudergusskokille und trägt damit zur Steuerung der Erstarrung und Abkühlung bei. Die angestrebte Isolierwirkung wird unter anderem durch die Schichtdicke des Schlichteüberzuges und dessen Zusammensetzung beeinflusst.

Zur Vorbereitung eines Schleudergussverfahrens wird die Schlichtezusammensetzung typischerweise im Sprühverfahren mit Hilfe einer Sprühlanze auf der Innenwandung der Schleudergusskokille aufgebracht. Um in der Produktion geringe Taktzeiten - und damit eine hohe Produktivität - zu realisieren, soll der resultierende Schlichteüberzug dabei im Rahmen der vorliegenden Erfindung schnell trocknen.

Im Schleudergussverfahren werden überwiegend nicht-entlüftete Schleudergusskokillen eingesetzt. Im Gegensatz zu entlüfteten Schleudergusskokillen besitzen die Kokillenflächen von nicht-entlüfteten Schleudergusskokillen keine Löcher, durch welche die während des Gussvorganges entstehenden Gase entweichen können. Da nicht-entlüftete Schleudergusskokillen somit gasundurchlässig sind, hat der Schlichteüberzug im Schleudergussverfahren häufig eine wichtige Funktion bezüglich der Gasregulierung während des Gussvorganges. Zur Vermeidung von Gasfehlern soll im Rahmen der vorliegenden Erfindung der Schlichteüberzug eine gewisse Porosität aufweisen und in der Lage sein, entstehende Zersetzungsgase aufzunehmen. Gleichzeitig sollte die Gasentwicklung des Schlichteüberzuges selbst möglichst gering sein, was einen niedrigen organischen Anteil sowie einen niedrigen Gehalt an andersartigen vergasbaren Bestandteilen, messbar als Glühverlust, vorteilhaft erscheinen lässt.

Über die Zusammensetzung des Schlichteüberzuges kann außerdem im Rahmen der erfindungsgemäßen Verwendung das Ziehverhalten des Gussstückes positiv beeinflusst werden. Wenn das Gussstück nach dem Erstarren aus der Schleudergusskokille gezogen wird, soll der Schlichteüberzug daran haften und idealerweise vollständig mit aus der Schleudergusskokille entfernt werden. Für die Sauberkeit am Arbeitsplatz ist es im Rahmen der vorliegenden Erfindung wünschenswert, einen Schlichteüberzug in Form einer zusammenhängenden Schicht auf dem Gussstück zu haben, welcher nicht oder nur geringfügig staubt. Im Gegenzug sollte der Schlichteüberzug nach dem Herausziehen des Gussstückes aus der Schleudergusskokille vorzugsweise wieder leicht vom Gussstück entfernbar sein, z.B. durch Abstrahlen.

Durch den jeweiligen Schlichteüberzug wird ebenfalls die Struktur der äußeren Oberfläche des späteren Gussstückes beeinflusst. Dabei können je nach Zusammensetzung des Schlichteüberzuges sowohl glatte als auch strukturierte Oberflächen erzeugt werden. Die Erzeugung strukturierter Oberflächen ist insbesondere für die Fertigung von Strukturgussbuchsen, vorzugsweise von Zylinderlaufbuchsen, relevant, auch im Rahmen der vorliegenden Erfindung. Die Außenwand einer Strukturgussbuchse hat eine raue Oberflächenstruktur, die beim Gießprozess entsteht und im Idealfall keiner weiteren Bearbeitung bedarf. Die Oberflächenstruktur weist dabei typischerweise Tiefen zwischen 0,3 und 1,1 mm auf, optional mit Hinterschneidungen oder anderen Strukturen (siehe z.B. Fig. 2 von US 2015/0122118 A1). Bei der Herstellung von z.B. Aluminium-Motorblöcken werden die Strukturbuchsen im Druckguss-Verfahren direkt in den Motorblock eingegossen. Das flüssige Metall umfließt dabei die strukturierte Oberfläche und füllt Vertiefungen sowie eventuell vorhandene Hinterschneidungen aus, sodass die Materialien beider Komponenten - Motorblock und Laufbuchse - eine äußerst starke und belastbare Verbindung eingehen. Die im Vergleich zu einer Laufbuchse ohne Strukturierung vergrößerte Oberfläche der Strukturbuchse bewirkt zudem im Motor eine bessere Wärmeableitung vom Brennraum in den Wasserraum.

Die vorstehend genannten sowie gegebenenfalls weitere Funktionen und Anforderungen werden im Rahmen der erfindungsgemäßen Verwendung durch die genaue Zusammensetzung des Schlichteüberzuges bzw. der auf die Form zu applizierenden Schlichtezusammensetzung eingestellt und optimiert bzw. an den jeweils beabsichtigten Zweck angepasst.

Schlichtezusammensetzungen zur Verwendung in der Gießerei enthalten meist folgende Komponenten, oder setzen sich aus diesen zusammen: (i) ein oder mehrere feinkörnige Feuerfeststoffe, d.h. feinkörnige, feuerfeste bis hochfeuerfeste anorganische Materialien (ii) eine Trägerflüssigkeit umfassend eine oder mehrere Verbindungen (Wasser, Alkohole, etc.) sowie (iii) als weitere Bestandteile z.B. ein oder mehrere Schlichtebindemittel (nachfolgend auch kurz als "Bindemittel" bezeichnet) und/oder Biozide und/oder Netzmittel (nachfolgend auch als oberflächenaktive Substanzen bezeichnet) und/oder rheologische Additive (z.B. Verdickungsmittel). Dies gilt entsprechend im Rahmen der vorliegenden Erfindung. Schlichtezusammensetzungen zur Beschichtung von Formen sind demnach meist Dispersionen von feinkörnigen, feuerfesten bis hochfeuerfesten anorganischen Materialien (Feuerfeststoffen) in einer Trägerflüssigkeit, z.B. einer wässrigen (d.h. Wasser enthaltenden) Trägerflüssigkeit oder einer nichtwässrigen (d.h. keine Wasser enthaltenden) Trägerflüssigkeit; zu Details hinsichtlich der Trägerflüssigkeit siehe weiter unten.

Eine Schlichtezusammensetzung kann darüber hinaus Schaumregulatoren, Pigmente und/oder Farbstoffe enthalten; dies gilt auch im Rahmen der vorliegenden Erfindung. Beispiele für Pigmente sind rotes und gelbes Eisenoxid sowie Graphit. Beispiele für Farbstoffe sind handelsübliche, dem Fachmann bekannte Farbstoffe.

Die Schlichtezusammensetzung wird durch ein geeignetes Auftragsverfahren, beispielsweise Sprühen, oder Streichen auf die Innenseite der Gießform aufgebracht und dort getrocknet, so dass ein Schlichteüberzug entsteht. Die Auftragung der Schlichtezusammensetzung mittels Streichen stellt dabei ein im Vergleich zum Sprühen um ein Vielfaches langsameres Auftragsverfahren dar. Falls die auf der Innenseite der Gießform aufzubringende Schlichtezusammensetzung in Pulverform vorliegt, wird die entsprechende Schlichtezusammensetzung üblicherweise durch Aufschütten des Pulvers auf die Innenseite der Gießform unter Rotation derselben aufgetragen. Hierbei ist allerdings eine gleichmäßige Verteilung der Schlichtezusammensetzung nur schwer realisierbar. Zudem lassen sich bei der Verwendung von pulverförmigen Schlichtezusammensetzungen in der Regel keine Schlichteüberzüge mit strukturierter Oberfläche und infolgedessen keine Gussstücke mit strukturierter Oberfläche erzeugen. Im Fall des Schleudergusses wird die Schlichtezusammensetzung somit (wie vorstehend bereits erwähnt) üblicherweise als Dispersion mittels eines Sprühauftrags auf der Innenwandung einer Schleudergusskokille aufgebracht; dies entspricht der Vorgehensweise im Rahmen der vorliegenden Erfindung.

Im Rahmen der vorliegenden Erfindung erfolgt die Trocknung des Schlichteüberzuges üblicherweise durch Zufuhr von Wärme aus der Schleudergusskokille. Die Schleudergusskokille ist dabei entweder noch aufgrund eines vorangegangenen Gussprozesses erwärmt oder wird vor der Applikation der Schlichtezusammensetzung, z.B. in einem Ofen, vortemperiert. Die Temperatur der Schleudergusskokille beträgt zu Beginn des Auftragens der Schlichtezusammensetzung vorzugsweise zwischen 150 und 450 °C. Eine solche Temperatur der Schleudergusskokille gewährleistet eine schnelle Trocknung der Schlichtzusammensetzung, und idealerweise eine vollständige Entfernung der in der Schlichtezusammensetzung enthaltenen flüssigen, z.B. wässrigen Phase.

Als "feuerfest" werden im vorliegenden Text im Einklang mit dem üblichen fachmännischen Verständnis Massen, Werkstoffe und Mineralien bezeichnet, die zumindest kurzzeitig der Temperaturbelastung beim Abguss bzw. bei der Erstarrung einer Eisenschmelze, meist Gusseisen, widerstehen können. Als "hochfeuerfest" werden Massen, Werkstoffe und Mineralien bezeichnet, die kurzfristig der Gießhitze einer Stahlschmelze widerstehen können. Die Temperaturen, die beim Abguss von Stahlschmelzen auftreten können, liegen meist höher als die Temperaturen, welche beim Abguss von Eisen- bzw. Gusseisenschmelzen auftreten können. Feuerfeste Massen, Werkstoffe und Mineralien (Feuerfeststoffe) und hochfeuerfeste Massen, Werkstoffe und Mineralien sind dem Fachmann bekannt, beispielsweise aus der DIN 51060:2000-06.

Als Feuerfeststoffe werden in Schlichtezusammensetzungen üblicherweise mineralische Oxide, Silikate oder Tonmineralien eingesetzt. Beispiele für auch im Rahmen der vorliegenden Erfindung geeignete Feuerfeststoffe sind Aluminiumsilikate, Schichtsilikate, Olivin, Talk, Glimmer, Graphit, Koks, Feldspat, Kaoline, kalzinierte Kaoline, Metakaolinit, Eisenoxid und Chromit, die jeweils einzeln oder in beliebigen Kombinationen miteinander eingesetzt werden können. In erfindungsgemäß zu verwendenden Schlichtezusammensetzungen ist die eingesetzte Gesamtmenge an kristallinem Siliziumdioxid sowie kristallinem Aluminiumoxid, kristallinem Zirkonoxid und kristallinem Zirkonsilikat vorzugsweise kleiner als 10 Gew.-%, bezogen auf die eingesetzte Gesamtmenge an partikulärem, amorphem Oxid. Durch den Feuerfeststoff wird u.a. eine thermische Isolierung zwischen Gießform und flüssigem Metall erreicht. Der Feuerfeststoff wird meist in Pulverform bereitgestellt. Die Partikelgröße (vorzugsweise gemessen mittels Lichtstreuung nach ISO 13320:2009) von bevorzugten Feuerfeststoffen liegt - auch im Rahmen der vorliegenden Erfindung - im Bereich von 0,1 bis 500 μm, bevorzugt im Bereich von 1 bis 200 μm. Als Feuerfeststoffe sind insbesondere solche Materialien geeignet, welche Schmelzpunkte aufweisen, die zumindest 100 °C oberhalb der Temperatur der jeweils eingesetzten Metallschmelze liegen und/oder die keine Reaktion mit der Metallschmelze eingehen.

Feuerfeststoffe werden zur Herstellung einer Schlichtezusammensetzung meist in einer Trägerflüssigkeit dispergiert. Die Trägerflüssigkeit ist dann ein oder der Bestandteil einer Schlichtezusammensetzung, der vorzugsweise unter Normalbedingungen (20 °C und 1013,25 hPa) flüssig vorliegt und/oder bei 150 °C und Normaldruck (1013,25 hPa) verdampfbar ist. Bevorzugte Trägerflüssigkeiten, welche auch im Rahmen der vorliegenden Erfindung geeignet sind, sind ausgewählt aus der Gruppe bestehend aus Wasser und organischen Trägerflüssigkeiten sowie deren Mischungen untereinander und/oder mit weiteren Bestandteilen. Geeignete organische Trägerflüssigkeiten sind vorzugsweise Alkohole. Bevorzugte Alkohole sind Ethanol, n-Propanol und Isopropanol (2-Propanol), wobei Ethanol besonders bevorzugt ist. Im Sinne des Umwelt- und Emissionsschutzes ist es allerdings bei der Auswahl der Schlichtezusammensetzung erstrebenswert, auf die Verwendung von organischen Trägerflüssigkeiten so weit wie möglich zu verzichten. Im Rahmen der vorliegenden Erfindung sind die Feuerfeststoffe in einer wässrigen Phase dispergiert, welche somit als Trägerflüssigkeit dient.

Das Dokument DE 600 04 770 T2 offenbart ein umhülltes Gussprodukt mit einer gusseisernen Komponente, die eine mit Aluminium oder einer Aluminiumlegierung umhüllte Oberfläche aufweist.

Die Dokumente US 2002/0157571 A1 und US 6,699,314 B2 offenbaren jeweils ein Formtrennmittel für eine Schleudergussform zum Beschichten einer Innenfläche einer integralen Schleudergussform, umfassend ein Bindemittel,

ein Wärmeisolierungsmittel, ein Lösungsmittel und eine Schaumkomponente (oberflächenaktive Substanz) mit einer schäumenden Eigenschaft.

Das Dokument EP 1 504 833 B1 offenbart einen Gusseiseneinsatz, um den ein anderes Metall zu gießen ist, aufweisend: eine Oberfläche für den Kontakt mit einer geschmolzenen Masse des anderen Metalls, das um den Gusseiseneinsatz zu gießen ist; und eine Mehrzahl von Vorsprüngen, die auf der Oberfläche angeordnet sind und jeweils im Wesentlichen kegelförmige Hinterschneidungen haben, die sich von der Oberfläche aus zunehmend nach außen hin ausbreiten.

Das Dokument EP 1 902 208 B1 offenbart eine Zylinderlaufbuchse zum Einsatzgießen, die in einem Zylinderblock verwendet wird, aufweisend eine Außenumfangsoberfläche, die eine Mehrzahl von Vorsprüngen aufweist, wobei jeder Vorsprung eine eingeschnürte Form aufweist, wobei ein Film aus einem Metallmaterial auf der Außenumfangsoberfläche und den Oberflächen der Vorsprünge ausgebildet ist.

Das Dokument US 2015/0122118 A1 offenbart eine Zylinderlaufbuchse, umfassend eine Vielzahl von Vorsprüngen auf ihrer Außenfläche.

Das Dokument CN 101554643 A offenbart ein "Centrifugal casting coating for cylinder liners and preparation method thereof" (englische Übersetzung des Titels gemäß Übersetzung aus Espacenet).

Das Dokument CN 103817285 A offenbart ein "Coating capable of forming mushroomshaped burrs during centrifugal casting of engine cylinder sleeve" (englische Übersetzung des Titels gemäß Übersetzung aus Espacenet).

Das Dokument EP 1 711 291 B1 offenbart eine Zylinderlaufbuchse zum Einsatzgießen mit einer Vielzahl von Vorsprüngen, die jeweils eine Verengung an einer Außenumfangsfläche aufweisen.

Das Dokument EP 2 422 902 A2 offenbart eine Zylinderlaufbuchse zum Einsatzgießen, die mit Vorsprüngen mit Höhen von 0,3 bis 1,2 mm und hinterschnittenen Anteilen in einem Verhältnis von 20 bis $80/cm^2$ an einer äußeren Umfangsfläche ausgestaltet ist, auf welcher wiederum eine thermisch gespritzte Schicht aufgebracht ist.

Das Dokument WO 2017/184239 A1 offenbart eine feuerfeste Beschichtungszusammensetzung, welche eine Trägerflüssigkeit und feste keramische Perlen umfasst.

Das Dokument US 2014/0196863 A1 offenbart eine Gießform für geschmolzenes Metall, welche eine aktive Oberfläche für den Kontakt mit geschmolzenem Metall aufweist. Die Oberfläche ist dabei mit einer nichtkristallinen und unporösen isolierenden Beschichtung überzogen, welche eine thermische Barriere bildet, um die Gießform zu schützen. Die Beschichtung umfasst eine Suspension aus 10,0 bis 55,0 Gew.-% feuerfestem Glas, bezogen auf die Masse der Suspension, sowie eine Trägerflüssigkeit zum Suspendieren der besagten Menge an feuerfestem Glas.

Das Dokument EP 2 159 208 A1 offenbart einen Wärmedämmkörper, der Kieselsäure und/ oder ein Silicat enthält.

Das Dokument EP 2 281 789 A1 offenbart eine Schlickerformulierung für die Herstellung eines Patches oder eines Streifens aus einer thermischen Schutzschicht mit einem keramischen Binder, keramischen Füllstoffen und gegebenenfalls weiteren Additiven.

Das Dokument EP 2 618 338 A2 offenbart ein Kabel, welches mindestens ein erstes Leiterpaar umfasst; wobei mindestens eines der ersten Leiterpaare mindestens eine Schicht aus einer den Leiter umgebenden Verbundisolierung aufweist, wobei die Verbundisolierung Isoliermaterial und Mikrooxidpartikel enthält, die dazu geeignet sind, eine Erhöhung der Flammschutzwirkung des Isoliermaterials und eine Verbesserung der elektrischen Leistungsfähigkeit des Kabels zu bewirken.

Das Dokument EP 2 722 863 A1 offenbart ein eingebettetes Polteil mit einem Isoliergehäuse, welches einen Vakuumschalter sowie elektrische Anschlüsse durch ein eingespritztes Einbettmaterial aufnimmt, wobei das eingespritzte Einbettmaterial mit Siliciumdioxid als Füllmaterial gefüllt ist.

Das Dokument DE 103 39 676 A1 offenbart einen amorphen porösen offenporigen $SiO_2$-Formkörper sowie ein Verfahren zu dessen Herstellung und dessen Verwendung. Die Herstellung eines solchen $SiO_2$-Formkörpers erfolgt dadurch, dass eine $SiO_2$ Partikel enthaltene Dispersion in eine Druckgussform einer Druckgussmaschine gepumpt wird, in der die Dispersion unter Bildung des $SiO_2$ Formkörpers über eine innere und eine äußere poröse Kunststoffmembran entfeuchtet wird.

Das Dokument DE 10 2006 046 619 A1 offenbart einen streichfähigen $SiO_2$-Schlicker zur Herstellung von schichtförmigem Quarzglas, enthaltend eine Dispersionsflüssigkeit und amorphe $SiO_2$-Teilchen mit Teilchengrößen bis maximal 500 $\mu$m, wobei $SiO_2$-Teilchen mit Teilchengrößen im Bereich zwischen 1 $\mu$m und 60 $\mu$m den größten Volumenanteil ausmachen.

Das Dokument EP 0 246 181 A1 offenbart eine Mikrosilica-Aufschlämmung, umfassend einen Träger auf wässriger Basis, mindestens etwa 50 Gew.-% Mikrosilica, bezogen auf das Gewicht der Aufschlämmung, ein anionisches Dispergiermittel für das Mikrosilica und einen Komplexbildner, der in der Lage ist, mehrwertige kationische Verunreinigungen in dem Mikrosilica zu komplexieren.

Das Dokument WO 2017/009216 A1 offenbart Formen zum Feingießen, welche $ZrO_2$-haltige Metalloxidstäube umfassen. Das Dokument offenbart ebenfalls Zusammensetzungen, welche $ZrO_2$-haltige und/oder $Al_2O_3$-hattige Metalloxidstäube oder Ofenstäube zur Herstellung von Formen zum Feingießen umfassen.

Das Dokument WO 2008/118023 A1 offenbart eine Beschichtungszusammensetzung für eine Gussform zur gerichteten Erstarrung von Silizium, welche Siliziumnitridteilchen, eine Kohlenstoffquelle und ein Oxid- und/oder Siliziumpulver umfasst.

Das Dokument DE 15 08 913 A1 offenbart ein Verfahren zur Verhinderung von Erosion der Oberfläche der Bodenteile einer Metallgießform, die mit auftreffenden geschmolzenem Metall in Berührung kommen, und zur Vermeidung des Anklebens der gegossenen Blöcke an die Bodenteile, bei dem auf die zu schützende Oberfläche eine Aufschlämmung aus einer in einem Bindemittel suspendierten feuerfesten Substanz in einer ausreichenden Menge aufgebracht wird, um einen Belag von ausreichender Dicke zur Verhinderung von Erosion und Ankleben zu bilden, und der feuchte Belag anschließend getrocknet wird.

Das Dokument DE 10 2017 106 458 A1 offenbart Elemente zum Einsetzen, wobei die Einsetzfläche der Elemente eine vorgegebene Form (einen Vorsprung) aufweist. DE 10 2017 106 458 A1 offenbart auch ein Verfahren zum Herstellen entsprechender Elemente zum Einsetzen unter Verwendung eines Diatomeenerde enthaltenden Formbeschichtungsmittels. DE 10 2017 107658 A1 beschreibt eine Schlichtezusammensetzung für die Gießereiindustrie enthaltend partikuläres, amorphes Siliziumdioxid.

Wie vorstehend bereits erläutert, wird eine Schlichtezusammensetzung im Schleudergussverfahren typischerweise im Sprühverfahren mit Hilfe einer Sprühlanze auf der Innenwandung der Schleudergusskokille aufgebracht. Zur Verringerung der Taktzeit bzw. aus Gründen der Produktivitätssteigerung ist es vorteilhaft, die gewünschte Menge der Schlichtezusammensetzung schnell aufzutragen. Dieses kann durch einen Sprühauftrag im Vorlauf (d.h. während des Einführens der Sprühlanze in die Schleudergusskokille) oder im Rücklauf (d.h. während des Herausführens der Sprühlanze aus der Schleudergusskokille) erfolgen. Vorzugsweise wird die Schlichtezusammensetzung sowohl im Vorlauf als auch im Rücklauf appliziert. Dadurch wird ein gleichmäßigerer Auftrag der Schlichtezusammensetzung gewährleistet und die notwendige Gesamtmenge an Schlichtezusammensetzung bzw. der Sprühdruck pro Durchlauf verringert. Der Sprühauftrag kann beliebig oft wiederholt werden, um den gewünschten Schlichteauftrag zu erhalten.

Ein Sprühauftrag im Vor und Rücklauf bedingt eine schnelle Trocknung der auf die Innenwandung der Schleudergusskokille applizierten Schlichtezusammensetzung, da im Bereich der Umkehrung der Sprührichtung (typischerweise an einem Ende der Schleudergusskokille) nur eine kurze Trocknungszeit zur Verfügung steht, sofern der Sprühprozess an dieser Stelle nicht unter hohem Aufwand unterbrochen werden soll. Insbesondere im Bereich des Strukturgusses hat sich jedoch gezeigt, dass eine ausreichend schnelle Trocknung der applizierten Schlichtezusammensetzung bei gleichzeitigem Erhalt eines Schlichteüberzuges mit für den Zweck des Strukturgießens (z.B. zur Herstellung von Strukturgussbuchsen) zufriedenstellender Oberflächenstrukturierung unter Verwendung der aus dem Stand der Technik bekannten Schlichtezusammensetzungen nicht realisierbar ist.

Die Erzeugung von strukturierten Oberflächen auf der Innenwandung von Schleudergusskokillen für den Strukturguss ist somit aktuell nur über einen hohen Zeit- sowie Materialeinsatz realisierbar. Die Erhöhung der Trocknungsgeschwindigkeit von bisher aus dem Stand der Technik bekannten Schlichtezusammensetzungen könnte vermutlich z.B. durch eine Erhöhung des Anteils an in den bekannten Schlichtezusammensetzungen enthaltenen Feststoffes erreicht werden. Die Erhöhung des Feststoffanteils würde allerdings gleichzeitig zu einer Erhöhung der Viskosität der jeweiligen Schlichtezusammensetzung führen, wodurch nach fachmännischer Einschätzung eine Auftragung solcher Schlichtezusammensetzungen mittels Sprühauftrags auf der Innenwandung der Schleudergusskokille (bei akzeptablem Druck und unter Verwendung einer für den Sprühauftrag geeigneten Düsenöffnung) nicht mehr möglich wäre.

Es ist somit festzuhalten, dass aus dem Stand der Technik keine zufriedenstellende Schlichtezusammensetzung zur Herstellung eines Schlichteüberzugs auf der Innenwandung einer Schleudergusskokille bekannt ist, welche mittels eines Sprühauftrags auf einer Schleudergusskokille appliziert werden kann, sodass (nach einer kurzen Trocknungszeit, resultierend aus einem hohen Feststoffanteil) der resultierende Schlichteüberzug auf der Innenwandung der Schleudergusskokille eine Negativstruktur besitzt, welche für die Herstellung eines metallischen Gussstücks mit strukturierter Oberfläche geeignet ist. Insbesondere sei darauf hingewiesen, dass es zudem mit aus dem Stand der Technik bekannten Schlichtezusammensetzungen nicht möglich ist, gleichmäßig strukturierte Oberflächen (d.h. Oberflächen, bei denen die gebildete Struktur unter anderem eine gleichmäßige Höhe aufweist) über die gesamte Länge der Kokilleninnenwandung zu erzeugen.

Ein weiteres Problem von aus dem Stand der Technik für den Strukturguss bekannten Schlichtezusammensetzungen besteht darin, dass diese häufig einen hohen Anteil an Silikose verursachenden kristallinen Quarzstäuben, wie z.B. (kalzinierte) Diatomeenerde, enthalten.

Zudem verfügen aus dem Stand der Technik bekannte Schlichtezusammensetzungen für den Strukturguss häufig über einen hohen Anteil an harten, kristallinen Feuerfeststoffen (wie z.B. Zirkonoxid oder Korund), welche aufgrund ihrer hohen abrasiven Eigenschaften beim Ziehen des Gussstücks zur Beschleunigung des Kokillenverschleißes beitragen.

Ausgehend vom Stand der Technik besteht daher ein Bedarf an einer Verwendung einer Schlichtezusammensetzung zur Herstellung eines Schlichteüberzugs auf der Innenwandung einer Schleudergusskokille mittels eines Sprühauftrags, welche eine oder mehrere, vorzugsweise alle, der folgenden vorteilhaften Eigenschaften aufweist oder

ermöglichen soll:

- die mittels eines Sprühauftrags auf der Innenwandung einer Schleudergusskokille applizierte Schlichtezusammensetzung soll eine hohe Trocknungsgeschwindigkeit unter industriellen Bedingungen ermöglichen, um somit eine geringe Taktzeit bzw. eine hohe Produktivität gewährleisten zu können;
- der unter Verwendung der Schlichtezusammensetzung hergestellte Schlichteüberzug auf der Innenwandung einer Schleudergusskokille soll eine Negativstruktur besitzen, welche für die Herstellung eines metallischen Gussstücks mit (positiv) strukturierter Oberfläche geeignet ist, wobei die Negativstruktur über die komplette Länge der Innenwandung der Schleudergusskokille mittels eines Sprühauftrags erzeugbar sein soll;
- der unter Verwendung der Schlichtezusammensetzung hergestellte Schlichteüberzug soll über eine abgestimmte Isolierwirkung zur Steuerung der Gefügewerte des Schleudergussstücks verfügen;
- die Schlichtezusammensetzung zur Herstellung eines Schlichteüberzugs auf der Innenwandung einer Schleudergusskokille soll aus Gründen der Arbeitssicherheit einen im Vergleich zu herkömmlichen Schlichtezusammensetzungen für das Schleudergussverfahren besonders niedrigen Anteil an kristallinen Quarzstäuben enthalten;
- die Schlichtezusammensetzung zur Herstellung eines Schlichteüberzugs auf der Innenwandung einer Schleudergusskokille soll zu Gunsten eines reduzierten Kokillenverschleißes über einen im Vergleich zu herkömmlichen Schlichtezusammensetzungen für das Schleudergussverfahren besonders niedrigen Anteil an harten, abrasiven Feuerfeststoffen verfügen;
- der unter Verwendung einer Schlichtezusammensetzung hergestellte Schlichteüberzug soll über einen besonders niedrigen Glühverlust verfügen, damit die resultierende Gasentwicklung während des Gussvorgangs und die damit einhergehende Gefahr von Gussfehlern vermieden bzw. verringert wird.

Es war eine primäre Aufgabe der vorliegenden Erfindung, eine Verwendung einer Schlichtezusammensetzung zur Herstellung eines Schlichteüberzugs auf der Innenwandung einer Schleudergusskokille anzugeben, die eine oder mehrere oder sämtliche der vorstehend genannten Eigenschaften besitzt bzw. ermöglicht.

Eine weitere Aufgabe der vorliegenden Erfindung bestand darin, ein entsprechendes Verfahren zur Herstellung einer innenwandig mit einem Schlichteüberzug versehenen Schleudergusskokille zur Verwendung im Schleudergussverfahren zur Verfügung zu stellen.

Eine weitere Aufgabe der vorliegenden Erfindung bestand darin, ein entsprechendes Verfahren zur Herstellung eines Gussstücks im Schleudergussverfahren zur Verfügung zu stellen.

Es war zudem eine weitere Aufgabe der vorliegenden Erfindung, eine Schleudergusskokille zur Verwendung im Schleudergussverfahren anzugeben, mit einem entsprechenden Schlichteüberzug auf der Innenwandung der Schleudergusskokille.

Weitere Aufgaben ergeben sich aus der nachfolgenden Beschreibung und den Patentansprüchen.

Die Erfindung wird in den beigefügten Ansprüchen und der vorliegenden Beschreibung näher definiert bzw. beschrieben, einschließlich besonders bevorzugter Kombinationen bevorzugter Parameter, Eigenschaften und Bestandteile der Erfindung. Spezielle und/oder bevorzugte Ausführungsformen der Erfindung werden nachfolgend genauer beschrieben. Sofern nicht anders angegeben, lassen sich bevorzugte Aspekte oder Ausführungsformen der Erfindung mit anderen Aspekten oder Ausführungsformen der Erfindung, insbesondere mit anderen bevorzugten Aspekten oder Ausführungsformen, kombinieren. Die Kombination von jeweils bevorzugten Aspekten oder Ausführungsformen miteinander ergibt jeweils wieder bevorzugte Aspekte oder Ausführungsformen der Erfindung. Ausführungsformen, Aspekte oder Eigenschaften, welche im Zusammenhang mit der vorliegenden Erfindung für die erfindungsgemäße Verwendung einer Schlichtezusammensetzung zur Herstellung eines Schlichteüberzugs auf der Innenwandung einer Schleudergusskokille beschrieben oder als bevorzugt beschrieben werden, gelten jeweils entsprechend bzw. sinngemäß auch für erfindungsgemäße Verfahren sowie für erfindungsgemäße Schleudergusskokillen zur Verwendung im Schleudergussverfahren.

Sofern im Folgenden erfindungsgemäße Verwendungen einer Schlichtezusammensetzung zur Herstellung eines Schlichteüberzugs auf der Innenwandung einer Schleudergusskokille, erfindungsgemäße Verfahren sowie erfindungsgemäße Schleudergusskokillen zur Verwendung im Schleudergussverfahren beschrieben werden, welche näher bestimmte Ausführungsformen, Bestandteile oder Merkmale "umfassen" oder "enthalten", soll jeweils auch die in einem engeren Umfang zu verstehende entsprechende Variante der besagten Verwendungen, Verfahren bzw. Schleudergusskokillen mit offenbart sein, welche aus diesen jeweils näher bestimmten Ausführungsformen, Bestandteilen oder Merkmalen "besteht" .

Erfindungsgemäß werden die primäre Aufgabe und weitere oben angegebene Aspekte der allgemeinen Aufgabe gelöst durch die Verwendung einer Schlichtezusammensetzung, wie sie in den beigefügten Ansprüchen definiert ist.

Gemäß einem weiteren verwandten Aspekt werden einzelne oder sämtliche der vorstehend genannten Aufgaben durch ein Verfahren zur Herstellung einer innenwandig mit einem Schlichteüberzug versehenen Schleudergusskokille zur Verwendung im Schleudergussverfahren gelöst, wie es in den beigefügten Patentansprüchen definiert ist.

Gemäß einem weiteren verwandten Aspekt werden einzelne oder sämtliche der vorstehend genannten Aufgaben ebenfalls durch ein Verfahren zur Herstellung eines Gussstücks im Schleudergussverfahren gelöst, wie es in den beigefügten Patentansprüchen definiert ist.

Die Erfindung betrifft darüber hinaus gemäß einem weiteren, korrespondierenden Aspekt auch eine Schleudergusskokille zur Verwendung im Schleudergussverfahren, mit einem Schlichteüberzug auf der Innenwandung der Schleudergusskokille, wie sie in den beigefügten Ansprüchen definiert ist.

Bevorzugte erfindungsgemäße Ausgestaltungen ergeben sich aus den Unteransprüchen.

Die vorliegende Erfindung betrifft zunächst die Verwendung einer Schlichtezusammensetzung

mit einem Feststoffanteil von mehr als 69 Gew.-%, bezogen auf die Gesamtmasse der Schlichtezusammensetzung, und

mit einem Glühverlust von weniger als 0,6 Gew.-% (bevorzugt weniger als 0,5 Gew.-%), bezogen auf die Gesamtmasse des Feststoffanteils der Schlichtezusammensetzung,

wobei die Schlichtezusammensetzung eine Dispersion von Feuerfeststoffen in einer wässrigen Phase ist, wobei die Feuerfeststoffe zumindest umfassen

1. (a)

    ◦ eine Gesamtmenge im Bereich von 4 bis 50 Gew.-% partikuläres, amorphes Oxid, bezogen auf die Gesamtmasse der Schlichtezusammensetzung,

        wobei das partikuläre, amorphe Oxid einen Anteil von 85 Gew.-% oder mehr Siliziumdioxid umfasst, bezogen auf die Gesamtmenge des partikulären, amorphen Oxids,

        wobei das partikuläre, amorphe Oxid einen massenbezogenen Wert $D_{95}$ von kleiner als 5 $\mu$m besitzt, bestimmt mittels Laserbeugung,

        wobei das partikuläre, amorphe Oxid eine Porosität von kleiner als 50% besitzt, bezogen auf die Gesamtmenge des partikulären amorphen Oxids, und

        wobei 90 Gew.-% oder mehr der Partikel (vorzugsweise: Primärpartikel, siehe unten) des partikulären, amorphen Oxids eine Sphärizität von größer als 0,9 besitzen, bestimmt durch Auswertung zweidimensionaler mikroskopischer Bilder, oder

    ◦ eine Gesamtmenge im Bereich von 4 bis 50 Gew.-% Mikrosilica als partikuläres, amorphes Oxid, bezogen auf die Gesamtmasse der Schlichtezusammensetzung, und

2. (b) einen oder mehrere weitere Feuerfeststoffe,

    wobei 98 Gew.-% oder mehr der Gesamtmasse der Feuerfeststoffe dazu geeignet sind, ein Sieb mit einer Maschenweite von 0,75 mm zu passieren,

    zur Herstellung eines Schlichteüberzugs auf der Innenwandung einer Schleudergusskokille mittels eines Sprühauftrags.

Die Bestimmung des Feststoffanteils in erfindungsgemäß zu verwendenden Schlichtezusammensetzungen erfolgt im Rahmen der vorliegenden Erfindung vorzugsweise gemäß der Standard-Prüfmethode DIN EN ISO 3251:2008-06, insbesondere gemäß der Methode wie in Beispiel 1 der vorliegenden Erfindung erläutert. Wenn nicht anders angegeben, wurde in eigenen Untersuchungen die Methode zur Bestimmung des Feststoffanteils gemäß Beispiel 1 angewandt. Der Begriff "Feststoffanteil" entspricht dem in der DIN EN ISO 3251:2008-06 verwendeten Begriff "nichtflüchtiger Anteil". Für die Durchführung des in DIN EN ISO 3251:2008-06 beschriebenen Verfahrens werden dabei als Prüfbedingungen vorzugsweise eine Prüftemperatur von 150 °C, eine Prüfdauer von 30 min sowie eine Einwaage von 2,5 g festgelegt.

Der in erfindungsgemäß zu verwendenden Schlichtezusammensetzungen enthaltene hohe Feststoffanteil von mehr als 69 Gew.-%, bezogen auf die Gesamtmasse der Schlichtezusammensetzung, bewirkt eine schnelle Trocknung der Schlichtezusammensetzung, nachdem diese auf der Innenwandung einer Schleudergusskokille mittels eines Sprühauftrags aufgebracht wurde.

Die Bestimmung des Glühverlustes in erfindungsgemäß zu verwendenden Schlichtezusammensetzungen erfolgt im Rahmen der vorliegenden Erfindung vorzugsweise gemäß der Standard-Prüfmethode, wobei zum Glühen eine Temperatur von 900 °C (anstatt wie in EN 12879:2000 angegeben von 550 °C) verwendet wird. Die bei der Bestimmung des Glühverlustes eingesetzten Trockenmassen werden vorzugsweise durch Trocknen der jeweiligen erfindungsgemäß zu verwendenden Schlichtezusammensetzung gemäß DIN EN ISO 3251:2008-06 erhalten, wobei als

Prüfbedingungen vorzugsweise eine Prüftemperatur von 150 °C, eine Prüfdauer von 30 min sowie eine Einwaage von 2,5 g gewählt werden.

Der Glühverlust ist gemäß EN 12879:2000 als jener Massenanteil definiert, der beim Glühen der Trockenmasse eines Schlamms unter festgelegten Bedingungen als Gas entweicht. Im Bereich des Schleudergusses, insbesondere bei Verwendung einer nicht entlüfteten Schleudergusskokille, stellt das Vorliegen eines niedrigen Glühverlustes bezogen auf die Gesamtmasse des Feststoffanteils der Schlichtezusammensetzung, eine wichtige Bedingung für die Vermeidung bzw. die Reduzierung von Gussfehlern dar, da das während des Kontaktes von flüssigem Metall mit Schlichteüberzug entstehende Gas in einer Schleudergusskokille (anders als etwa in einem Gießereiformkörper) nicht nach außen entweichen kann. Eine starke Gasentwicklung während des Gussvorganges erhöht demnach zwangsläufig die Gefahr der Entstehung von Gussfehlern. Der in der vorliegenden Erfindung definierte niedrige Glühverlust von weniger als 0,6 Gew.-%, bezogen auf die Gesamtmasse des Feststoffanteils der Schlichtezusammensetzung, stellt somit eine von mehreren Bedingungen dar, damit eine Schlichtezusammensetzung im Schleudergussverfahren vorteilhaft eingesetzt werden kann.

Die Verwendung einer wässrigen (d.h. Wasser enthaltenden) Phase als Trägerflüssigkeit birgt im Rahmen der vorliegenden Erfindung besondere Vorteile. Zum einen ist Wasser (wie vorstehend bereits erläutert) im Sinne des Umwelt- und Emissionsschutzes als unbedenklich einzustufen. Zum anderen zeichnet sich Wasser (im Gegensatz zu manchen organischen Trägerflüssigkeiten) durch ein rückstandsloses Verdampfen bzw. Verdunsten aus. Insbesondere hinterlässt Wasser beim Verdampfen bzw. Verdunsten keinen organischen Rückstand, welcher für eine nachteilige Erhöhung des Glühverlustes der Schlichtezusammensetzung sorgen könnte. Unter anderem durch die Verwendung einer wässrigen Phase als Trägerflüssigkeit wird somit das Erreichen eines erfindungsgemäß niedrigen Glühverlustes von weniger als 0,6 Gew.-%, bezogen auf die Gesamtmasse des Feststoffanteils der Schlichtezusammensetzung, sichergestellt bzw. ermöglicht.

Unter dem Begriff "partikuläres, amorphes Oxid" wird im Rahmen der vorliegenden Erfindung teilchenförmiges, synthetisches, amorphes Oxid verstanden, beispiels- und vorzugsweise Siliziumdioxidpartikel, die durch Versprühen einer Siliziumdioxidschmelze herstellbar sind, und/oder Mikrosilica. Ein partikuläres Oxid wird im Rahmen der vorliegenden Erfindung als amorph bezeichnet, wenn durch röntgendiffraktometrische Untersuchungen an besagtem Oxid eine fehlende Fernordnung der Atome nachweisbar ist. Als partikuläres, amorphes Oxid wird im Rahmen der vorliegenden Erfindung Mikrosilica besonders bevorzugt. Mikrosilica wird auch mit der CAS-Nummer 69012-64-2 bezeichnet, vgl. Bernd Friede, Per Fidjestøl in der Publikation Nachrichten aus der Chemie, 2011, 59, 956-958. Der Einsatz anderer partikulärer, amorpher Oxide ist technisch akzeptabel, sofern die vorstehend und in den Ansprüchen definierten (Mindest-)Eigenschaften vorliegen, Beispiele solcher anderen partikulären amorphen Oxide sind weiter unten angegeben.

Die Verwendung einer Gesamtmenge im Bereich von 4 bis 50 Gew.-% partikuläres, amorphes Oxid, bezogen auf die Gesamtmasse der Schlichtezusammensetzung, trägt dazu bei, dass die erfindungsgemäß zu verwendende Schlichtezusammensetzung trotz des hohen Feststoffanteils von mehr als 69 Gew.-%, bezogen auf die Gesamtmasse der Schlichtezusammensetzung, ihre vorteilhaften rheologischen Eigenschaften beibehält und somit auch bei erhöhtem Feststoffanteil mittels eines Sprühauftrages auf die Innenwandung einer Schleudergusskokille applizierbar ist.

Wie vorstehend bereits erläutert, wird als partikuläres, amorphes Oxid vorzugsweise Siliziumdioxid in Form von Siliziumdioxidpartikeln, die durch Versprühen einer Siliziumdioxidschmelze herstellbar sind, und/oder Mikrosilica eingesetzt. Der Einsatz der vorgenannten Formen von Siliziumdioxid innerhalb einer erfindungsgemäß zu verwendenden Schlichtezusammensetzung ist bevorzugt, da diese einen besonders positiven Effekt auf die rheologischen Eigenschaften der Schlichtezusammensetzung ausüben und somit maßgeblich zur Sprühfähigkeit der erfindungsgemäß zu verwendenden Schlichtezusammensetzung bei gleichzeitig hohem Feststoffanteil beitragen. Entsprechend umfasst das in der besagten Gesamtmenge in der erfindungsgemäß zu verwendenden Schlichtezusammensetzung vorhandene partikuläre, amorphe Oxid einen Anteil von 85 Gew.-% oder mehr Siliziumdioxid, bezogen auf die Gesamtmenge des partikulären, amorphen Oxids.

Der "massenbezogene Wert $D_{95}$" des in der besagten Gesamtmenge in der erfindungsgemäß zu verwendenden Schlichtezusammensetzung vorhandenen partikulären, amorphen Oxids ist ein Messwert, der sich aus der Teilchengrößenverteilung der Partikel der Gesamtmenge dieses partikulären, amorphen Oxids ergibt. Die Teilchengrößenverteilung wird auf an sich bekannte Weise durch Laserbeugung bestimmt, vorzugsweise nach der Standard-Prüfmethode gemäß DIN ISO 13320:2009. Hierbei ermittelte $D_{95}$-Werte der Summenhäufigkeitsverteilung der massengemittelten Größenverteilungsfunktion geben an, dass 95 Gew.-% der Partikel eine Teilchengröße aufweisen, die gleich oder kleiner als der angegebene Wert (z.B. 5 $\mu$m) ist. Geeignete Geräte für die Bestimmung der Teilchengrößenverteilung sind an sich bekannte Laserbeugungsgeräte, z.B. vom Typ "Mastersizer 3000" der Fa. Malvern, Großbritannien, vorzugsweise vom Typ "Coulter LS 230" der Fa. Beckman Coulter, USA, wobei die Messung vorzugsweise mit Hilfe der "Polarization Intensity Differential Scattering" ("PIDS")-Technologie vorgenommen wird. Die Auswertung der Streulichtsignale erfolgt bei den vorgenannten Laserbeugungsmethoden jeweils vorzugsweise nach der Mie-Theorie, welche auch das Brechungs- und Absorptionsverhalten der Partikel berücksichtigt.

Sofern die (Primär-)Partikel des partikulären, amorphen Oxids als Agglomerate und/oder Aggregate und/oder in anderer Weise als Zusammenschlüsse mehrerer Partikel vorliegen, werden diese vor Durchführung der Bestimmung des massenbezogenen Wertes $D_{95}$ des partikulären, amorphen Oxids sowie vor Durchführung der Bestimmung der Sphärizität der Partikel des partikulären, amorphen Oxids vorzugsweise auf an sich bekannte Weise schonend mechanisch oder in ähnlicher Weise getrennt, um eine Verfälschung des Ergebnisses soweit wie möglich auszuschließen.

Unter dem Begriff "Porosität" wird im Rahmen der vorliegenden Erfindung die offene Porosität verstanden. Als offene Poren werden in diesem Zusammenhang Hohlräume im partikulärem, amorphem Oxid verstanden, die untereinander sowie mit der sie umschließenden Umgebung in Verbindung stehen. Die Porosität des partikulären, amorphen Oxids ist im Rahmen der vorliegenden Erfindung entsprechend definiert als der prozentuale Anteil des offenen Porenvolumens, bezogen auf das Gesamtvolumen. Eine geringe Porosität bewirkt, dass das partikuläre, amorphe Oxid bei Einsatz in der erfindungsgemäß zu verwendenden Schlichtezusammensetzung keine bzw. nur geringe Mengen an Flüssigkeit aus der wässrigen Phase aufnimmt, wodurch unter anderem der besonders niedrige Glühverlust der erfindungsgemäß zu verwendenden Schlichtezusammensetzung realisiert wird. Die Porosität eines Stoffes wird typischerweise (wie auch im Rahmen der vorliegenden Erfindung) mittels Quecksilber-Porosimetrie bestimmt.

Die Sphärizität ist im Rahmen der vorliegenden Erfindung definiert als der Umfang des flächengleichen Kreises (Equivalent Projection Area of a Circle, kurz EQPC) eines Partikels geteilt durch den tatsächlichen Umfang des Partikels. Die für die Bestimmung der Sphärizität notwendige Ermittlung des Partikelumfangs erfolgt für Partikel mit einer Partikelgröße von kleiner als 5 $\mu$m vorzugsweise nach der Standard-Prüfmethode gemäß ISO 13322-1:2014 sowie für Partikel mit einer Partikelgröße von größer als 5 $\mu$m vorzugsweise nach der Standard-Prüfmethode gemäß ISO 13322-02:2006.

Moderne handelsübliche elektronenmikroskopische oder lichtmikroskopische Systeme ermöglichen eine digitale Bildanalyse und somit eine komfortable Bestimmung der Partikelform. Die digitale Bildanalyse ist für Untersuchungen zur Sphärizität bevorzugt. Die digitale Bildanalyse wird vorzugsweise mittels kommerzieller Bildanalysesoftware, wie z.B. der Image-Pro Plus Software von Media Cybernetics, durchgeführt. Bei der Probenpräparation für die digitale Bildanalyse ist auf eine zufällige Orientierung der Partikel zu achten. Gegebenenfalls sind Dünnschliffe herzustellen.

Das partikuläre, amorphe Oxid des Bestandteils (a) zählt für die Zwecke der vorliegenden Erfindung nicht zu den "weiteren" Feuerfeststoffen des Bestandteils (b). Umgekehrt sind als weitere Feuerfeststoffe des Bestandteils (b) solche Feuerfeststoffe zu verstehen, welche nicht sämtliche der für die Feuerfeststoffe des Bestandteils (a) angeführten Kriterien erfüllen.

Als weitere Feuerfeststoffe des Bestandteils (b) werden im Rahmen der vorliegenden Erfindung vorzugsweise übliche aus dem Stand der Technik bekannte Feuerfeststoffe verwendet, welche vorstehend bereits genannt wurden. Besonders bevorzugt werden als weitere Feuerfeststoffe des Bestandteils (b) eine oder mehrere Substanzen ausgewählt aus der Gruppe bestehend aus Aluminiumsilikaten, Schichtsilikaten, Olivin, Talk, Glimmer, Graphit, Koks, Feldspat, Kaolinen, kalzinierten Kaolinen, Metakaolinit, Eisenoxid und Chromit verwendet.

Bezüglich der üblichen Form und Größe der weiteren Feuerfeststoffe des Bestandteils (b) sei ebenfalls auf die vorstehende Diskussion zu üblichen aus dem Stand der Technik bekannten Feuerfeststoffen verwiesen, die hier entsprechend zutrifft.

Herkömmliche Schleudergusskokillen sowie Sprühmethoden zur Herstellung eines Schlichteüberzugs auf der Innenwandung einer Schleudergusskokille mittels eines Sprühauftrags, wie sie im Zuge der vorliegenden Erfindung Anwendung finden können, sind dem Fachmann bekannt. Bevorzugt wird die erfindungsgemäß zu verwendende Schlichtezusammensetzung unter Druck durch eine Einstoff-Druckdüse auf die Innenwandung der Schleudergusskokille gesprüht bzw. auf der Innenwandung der Schleudergusskokille verstäubt. An der Düsenmündung wird je nach Düsenbauart ein Flüssigkeitsstrahl oder eine Flüssigkeitslamelle erzeugt. Die Tropfenbildung setzt in einer gewissen Entfernung von der Düsenmündung ein. Typische Düsen sind Turbulenz-, Flachstrahl-, Prall- und Hohlkegeldruckdüsen. Die Öffnung von typischen Düsen kann sowohl eine runde als auch eine ovale Form besitzen. Im Falle einer runden Öffnung beträgt der Durchmesser der Düse vorzugsweise nicht mehr als 4 mm. Im Falle einer ovalen Düse beträgt die kleinste Abmessung der Öffnung vorzugsweise nicht mehr als 3,5 mm.

Eine erfindungsgemäß zu verwendende Schlichtezusammensetzung kann in höherkonzentrierter Form (als Konzentrat) vorliegen; eine solche Schlichtezusammensetzung (Konzentrat) wird dann vorzugsweise in manchen Fällen verdünnt, um ihren Sprühauftrag mit üblichen Vorrichtungen zu ermöglichen oder zu erleichtern. Eine Direktapplikation (direkte Verwendung ohne Verdünnen) ist aber ebenfalls möglich (abhängig von der Wahl der Sprühauftragsvorrichtung).

Bevorzugt ist die erfindungsgemäße Verwendung einer Schlichtezusammensetzung, deren Feststoffanteil im Bereich von mehr als 69 Gew.-% bis maximal 80 Gew.-%, bevorzugt maximal 75 Gew.-% liegt, bezogen auf die Gesamtmasse der Schlichtezusammensetzung. Schlichtezusammensetzungen mit einem höheren Feststoffanteil als 75 Gew.-%, vorzugsweise mit einem Feststoffanteil bis maximal 80 Gew.-%, bezogen auf die Gesamtmasse der Schlichtezusammensetzung, können erfindungsgemäß verwendet werden, sollten jedoch im Regelfall vor der Verwendung verdünnt werden um die rheologischen Eigenschaften an die Bedürfnisse des Einzelfalls anzupassen. Auch bei einem Feststoffanteil von weniger als 75 Gew.-% kann ein Verdünnen vorteilhaft sein. In manchen Fällen ist eine unmittelbare Verwendung bevorzugt, ohne zwischenzeitliches Verdünnen. Vorteilhaft ist es dann, eine Schlichtezusam-

mensetzung herzustellen, die bereits die im Anwendungsfall gewünschten rheologischen Eigenschaften und den dafür erforderlichen Feststoffgehalt besitzt, z.B. einen Feststoffgehalt im Bereich von mehr als 69 Gew.-% bis 73 Gew.-%.

Bevorzugt ist die erfindungsgemäße Verwendung einer Schlichtezusammensetzung, wobei das partikuläre, amorphe Oxid des Bestandteils (a) einen Glühverlust von weniger als 0,6 Gew.-% besitzt, bezogen auf die Gesamtmenge des partikulären, amorphen Oxids des Bestandteils (a), bevorzugt einen Glühverlust von weniger als 0,5 Gew.-%, besonders bevorzugt von weniger als 0,3 Gew.-%. Bezüglich der Definition, der Bestimmung sowie der Notwendigkeit eines niedrigen Glühverlustes im Rahmen der vorliegenden Erfindung sei auf die vorstehende Diskussion zum Glühverlust verwiesen, die hier entsprechend zutrifft.

Der niedrige Glühverlust, bezogen auf die Gesamtmasse des Feststoffanteils der Schlichtezusammensetzung, wird somit vorzugsweise u.a. dadurch realisiert, dass das in der erfindungsgemäß zu verwendenden Schlichtezusammensetzung enthaltene partikuläre, amorphe Oxid des Bestandteils (a) selbst einen Glühverlust von zumindest weniger als 0,6 Gew.-% besitzt, bezogen auf die Gesamtmenge des partikulären, amorphen Oxids, vorzugsweise einen Glühverlust von weniger als 0,5 Gew.-%, besonders vorzugsweise von weniger als 0,3 Gew.-%. Der niedrige Glühverlust des partikulären, amorphen Oxids des Bestandteils (a), ist insbesondere auf die Tatsache zurückzuführen, dass das partikuläre, amorphe Oxid des Bestandteils (a) keine bzw. nur geringe Mengen der wässrigen Phase absorbiert, in welcher es erfindungsgemäß als Dispersion vorliegt. Die fehlende bzw. nur schwach ausgeprägte Neigung des partikulären, amorphen Oxids des Bestandteils (a) zur Absorption von wässriger Phase sorgt dafür, dass nach der Abtrennung bzw. der Trocknung der erfindungsgemäß zu verwendenden Schlichtezusammensetzung keine bzw. nur geringe Mengen an wässriger Phase in z.B. etwaigen Poren des partikulären, amorphen Oxids verbleiben. Die guten Trocknungseigenschaften des partikulären, amorphen Oxids führen im Umkehrschluss zu einem niedrigen Glühverlust des partikulären, amorphen Oxids des Bestandteils (a), wodurch der Glühverlust der Gesamtmasse des Feststoffanteils positiv beeinflusst wird.

Bevorzugt ist eine erfindungsgemäß zu verwendende Schlichtezusammensetzung, wobei die Schlichtezusammensetzung (i) Zirkonoxid, (ii) Kohlenstoff und/oder (iii) eine Lewis-Säure umfasst, vorzugsweise als Nebenbestandteile aus der Herstellung des partikulären, amorphen Oxids des Bestandteils (a).

Der Begriff "Nebenbestandteil" bedeutet im Rahmen der vorliegenden Erfindung, dass die Schlichtezusammensetzung solche Nebenbestandteile nur in geringen Mengen enthält, die etwa noch als Verunreinigungen oder Anhaftungen aus vorangegangenen Herstellungs- und/oder Bearbeitungsverfahren des partikulären, amorphen Oxids stammen können. Die genannten Nebenbestandteile sind vorzugsweise in einer Menge von nicht mehr als 15 Gew.-% (bzw. Massenanteil), besonders bevorzugt in einer Menge von nicht mehr als 10 Gew.-%, am meisten bevorzugt in einer Menge von nicht mehr als 5 Gew.-% in der Schlichtezusammensetzung vorhanden, jeweils bezogen auf die Gesamtmenge des partikulären, amorphen Oxids des Bestandteils (a).

Unter Zirkonoxid (auch bezeichnet als Zirkondioxid, Zirconiumdioxid oder Zirconium(IV)-oxid) wird das Oxid des Elementes Zirconium verstanden. Es kann geringe Anteile anderer Metalloxide umfassen.

Die erfindungsgemäß zu verwendende Schlichtezusammensetzung kann ein oder mehrere Lewis-Säuren und/oder deren Mischungen umfassen. Unter "Lewis-Säure" wird im Rahmen der vorliegenden Erfindung eine Säure nach dem von G. N. Lewis vorgeschlagenen Konzept verstanden, wonach eine Säure ein Elektronenpaarakzeptor, d.h. ein Molekül oder Ion mit unvollständiger Edelgaskonfiguration ist, das ein von einer Lewis-Base zur Verfügung gestelltes Elektronenpaar aufnehmen und mit dieser ein sogenanntes Lewis-Addukt bilden kann. Eine Lewis-Säure ist elektrophil, während eine Lewis-Base nucleophil ist. Es können somit auch Moleküle und Ionen als (Lewis)-Säuren aufgefasst werden, die nach den klassischen Vorstellungen keine Säuren sind.

Die für die Zwecke der vorliegenden Erfindung relevanten Eigenschaften der erfindungsgemäß zu verwendenden Schlichtezusammensetzung sind bei Anwesenheit der vorstehend genannten Stoffe/Stoffgruppen (i) bis (iii) nicht signifikant anders als bei deren Abwesenheit. Für die Herstellung der erfindungsgemäß zu verwendenden Schlichtezusammensetzung muss daher nicht auf hochreine Ausgangsstoffe zurückgegriffen werden, sondern es können handelsübliche Ausgangsmaterialien (mit ihren typischen Nebenbestandteilen bzw. Verunreinigungen, vgl.(i), (ii) und (iii)) eingesetzt werden.

Ebenfalls bevorzugt ist eine erfindungsgemäß zu verwendende Schlichtezusammensetzung, wobei das partikuläre, amorphe Oxid des Bestandteils (a) einen Anteil von 90 Gew.-% Siliziumdioxid oder mehr, vorzugsweise 95 Gew.-% oder mehr Siliziumdioxid umfasst, jeweils bezogen auf die Gesamtmenge des partikulären, amorphen Oxids des Bestandteils (a).

Bezüglich der Vorteile, welche daraus resultieren, dass das partikuläre, amorphe Oxid des Bestandteils (a) einen, derart einen hohen Anteil von Siliziumdioxid umfasst, bezogen auf die Gesamtmenge des partikulären, amorphen Oxids des Bestandteils (a), sei auf die vorstehende Diskussion zu partikulärem, amorphen Oxid verwiesen, die hier entsprechend zutrifft.

Bevorzugt ist weiterhin eine erfindungsgemäß oder bevorzugt erfindungsgemäß zu verwendende Schlichtezusammensetzung, wobei 90 Gew.-% oder mehr der Partikel des partikulären, amorphen Oxids des Bestandteils (a) eine Sphärizität von größer als 0,95 besitzen, bestimmt durch Auswertung zweidimensionaler mikroskopischer Bilder

und/oder
wobei das partikuläre, amorphe Oxid des Bestandteils (a) einen massenbezogenen Wert $D_{95}$ von kleiner als 3 μm, vorzugsweise kleiner als 2 μm, besonders vorzugsweise kleiner als 1 μm besitzt, bestimmt mittels Laserbeugung.

Bezüglich der Definition sowie der Bestimmung von Sphärizität und massenbezogenem Wert $D_{95}$ sei auf die vorstehende Diskussion zu Sphärizität und massenbezogenem Wert $D_{95}$ verwiesen, die hier entsprechend zutrifft.

Im Rahmen der vorliegenden Erfindung ist der Einsatz von besonders runden Partikeln des partikulären, amorphen Oxids des Bestandteils (a) (d.h. mit hoher Sphärizität) bzw. von besonders kleinem partikulärem, amorphem Oxid (d.h. mit niedrigem massenbezogenem Wert $D_{95}$) bevorzugt, da beide Eigenschaften einen positiven Effekt auf das rheologische Verhalten (bzw. das Fließverhalten) der Schlichtezusammensetzung ausüben und somit maßgeblich zur Sprühfähigkeit der erfindungsgemäß zu verwendenden Schlichtezusammensetzung bei gleichzeitig hohem Feststoffanteil beitragen. Der Einsatz von Mikrosilica ist entsprechend besonders bevorzugt.

Ebenfalls bevorzugt ist eine erfindungsgemäß oder bevorzugt erfindungsgemäß zu verwendende Schlichtezusammensetzung, wobei das partikuläre, amorphe Oxid des Bestandteils (a) einen oder mehrere Bestandteile umfasst, ausgewählt aus der Gruppe bestehend aus

- Siliziumdioxidpartikel, die durch Versprühen einer Siliziumdioxidschmelze herstellbar sind, und
- Mikrosilica,

vorzugsweise einen Gesamtanteil von 85 Gew.-% oder mehr an einem oder sämtlichen dieser Bestandteile, bevorzugt 90 Gew.-% oder mehr, besonders bevorzugt 95 Gew.-% oder mehr, jeweils bezogen auf die Gesamtmenge des partikulären, amorphen Oxids des Bestandteils (a).

Eine an sich bekannte, im Rahmen der Erfindung bevorzugte Möglichkeit der Herstellung von partikulärem, amorphem Oxid des Bestandteils (a) ist somit das Versprühen einer Siliziumdioxidschmelze. Die Herstellung von partikulärem, amorphem Oxid des Bestandteils (a) mittels Versprühen einer Siliziumdioxidschmelze hat den Vorteil, dass dadurch kleine (Siliziumdioxid-)Partikel (d.h. partikuläres, amorphes Oxid mit niedrigem massenbezogenem Wert $D_{95}$) mit gleichzeitig hoher Sphärizität zugänglich werden. In einem solchen Herstellverfahren wird dabei vorzugsweise (wie auch in anderen bevorzugten Herstellverfahren) bewusst auf die Durchführung eines (dem Versprühen nachgeschalteten) Vermahlungsprozesses verzichtet, da ein solcher Vermahlungsprozess einen negativen Einfluss auf die hohe Sphärizität der Partikel des hergestellten partikulären, amorphen Oxids des Bestandteils (a) haben könnte.

Wie vorstehend bereits erwähnt ist Mikrosilica (CAS-Nummer: 69012-64-2) eine weitere an sich bekannte, im Rahmen der Erfindung besonders bevorzugte Art von partikulärem, amorphem Oxid des Bestandteils (a) ist. Mikrosilica entsteht typischerweise als Nebenprodukt der großtechnischen Herstellung von Silizium und Ferrosilizium im elektrischen Lichtbogenofen durch Reduktion von Quarzsand mit Koks oder Anthrazit, wobei zunächst Siliziummonoxidgas gebildet wird, welches anschließend zu Siliziumdioxid weiteroxidiert. Bei nachfolgender Abkühlung kondensiert das gebildete Siliziumdioxid zu partikulärem, amorphem Mikrosilica.

Mikrosilica besteht vorzugsweise aus nahezu perfekten Kugeln amorphen Siliziumdioxids, wie elektronenmikroskopische Untersuchungen belegen. Im Gegensatz zu anderen im Rahmen der vorliegenden Erfindung bevorzugten partikulären, amorphen Oxiden des Bestandteils (a), sind die Partikel im Mikrosilica zudem typischerweise nicht zusammengesintert, sondern liegen als isolierte Kugeln vor, die vollständig dispergierbare Agglomerate bilden. Die vorstehend genannten Eigenschaften bewirken, dass Mikrosilica im besonderen Maße dazu geeignet ist, die rheologischen Eigenschaften von erfindungsgemäß zu verwendenden Schlichtezusammensetzungen positiv zu beeinflussen, wodurch insbesondere gewährleistet wird, dass die Schlichtezusammensetzungen trotz eines hohen Feststoffanteils von mehr als 69 Gew.-% sprühfähig bleiben bzw. mittels eines Sprühauftrags auf die Innenwandung einer Schleudergusskokille applizierbar sind.

Aufgrund der positiven Eigenschaften, welche mit dem Einsatz von Mikrosilica als partikuläres, amorphes Oxid des Bestandteils (a) verbunden sind, betrifft eine bevorzugte Ausgestaltung der vorliegenden Erfindung die Verwendung einer Schlichtezusammensetzung

mit einem Feststoffanteil von mehr als 69 Gew.-%, bezogen auf die Gesamtmasse der Schlichtezusammensetzung, und

mit einem Glühverlust von weniger als 0,6 Gew.-%, bezogen auf die Gesamtmasse des Feststoffanteils der Schlichtezusammensetzung,

wobei die Schlichtezusammensetzung eine Dispersion von Feuerfeststoffen in einer wässrigen Phase ist, wobei die Feuerfeststoffe zumindest umfassen

1. (a) eine Gesamtmenge im Bereich von 4 bis 50 Gew.-% Mikrosilica als partikuläres, amorphes Oxid, bezogen auf die Gesamtmasse der Schlichtezusammensetzung,
und
2. (b) einen oder mehrere weitere Feuerfeststoffe,

wobei 98 Gew.-% oder mehr der Gesamtmasse der Feuerfeststoffe dazu geeignet sind, ein Sieb mit einer Maschenweite von 0,75 mm zu passieren,
zur Herstellung eines Schlichteüberzugs auf der Innenwandung einer Schleudergusskokille mittels eines Sprühauftrags.

Für die Verwendung von Mikrosilica als partikuläres, amorphes Oxid des Bestandteils (a) gilt das vorstehend genannte regelmäßig entsprechend.

Ebenfalls bevorzugt ist eine erfindungsgemäß oder bevorzugt erfindungsgemäß zu verwendende Schlichtezusammensetzung, wobei das partikuläre, amorphe Oxid des Bestandteils (a) einen Anteil von 85 Gew.-% oder mehr Mikrosilica umfasst, bevorzugt einen Anteil von 90 Gew.-% oder mehr, besonders bevorzugt einen Anteil von 95 Gew.-% oder mehr, jeweils bezogen auf die Gesamtmenge des partikulären, amorphen Oxids des Bestandteils (a), wobei vorzugsweise

- das Mikrosilica ein zirkonhaltiges Mikrosilica ist, bevorzugt ein zirkonhaltiges Mikrosilica, wie es bei der Herstellung von Zirkonoxid im Lichtbogenprozess als Nebenprodukt anfällt,
und/oder

- eine Dispersion des partikulären, amorphen Oxids des Bestandteils (a) in destilliertem Wasser mit einer Konzentration des partikulären, amorphen Oxids des Bestandteils (a) von 10 Gew.-%, bezogen auf die Gesamtmasse der Dispersion, einen pH-Wert von kleiner 7, bevorzugt von kleiner 6,5 besitzt
und/oder

- die gewichtsmittlere Größe der Primärpartikel des Mikrosilica im Bereich von 100 nm bis 150 nm liegt.

Besonders bevorzugt ist im Rahmen der vorliegenden Erfindung die Verwendung von Mikrosilica, wie es bei der Herstellung von Zirkonoxid im Lichtbogenprozess als Nebenprodukt anfällt. Diese besonders bevorzugte Herstellungsart von Mikrosilica sorgt dafür, dass eine entsprechende Schlichtezusammensetzung vorzugsweise als Nebenbestandteil Zirkondioxid enthält.

Erfindungsgemäß zu verwendende Schlichtezusammensetzungen zur Beschichtung von Formen sind meist Dispersionen von feinkörnigen, feuerfesten bis hochfeuerfesten anorganischen Materialien (Feuerfeststoffen) in einer Trägerflüssigkeit, z.B. einer wässrigen (d.h. Wasser enthaltenden) Trägerflüssigkeit. Solche Dispersionen ist vorzugsweise herstellbar durch Dispergieren einer Menge des partikulären, amorphen Oxids des Bestandteils (a) in destilliertem Wasser unter Bildung einer Dispersion mit einem Anteil von 10 Gew.-% partikulärem, amorphem Oxid des Bestandteils (a), bezogen auf die Gesamtmasse der Dispersion.

Für die Zwecke der vorliegenden Erfindung wird der pH-Wert in einer Schlichtezusammensetzung jeweils bestimmt aus der Dispersion, vorzugsweise gemäß der Standard-Prüfmethode DIN 19260:2012-10.

Unter dem Begriff "Primärpartikel" werden im Rahmen der vorliegenden Erfindung die durch geeignete physikalische Verfahren (z.B. Lichtmikroskopie oder Elektronenmikroskopie) als Individuen erkennbaren einzelnen Partikel bzw. Teilchen des Mikrosilica verstanden. Primärpartikel sind somit klar von Agglomeraten (Ansammlung von Primärpartikeln, die lose, z.B. über van der Waals Kräfte, miteinander verbunden sind) oder Aggregaten (verwachsener bzw. zusammengesinterter Verband von Primärpartikeln, welche über chemische Bindungen verbunden sind) zu unterscheiden. Im Gegensatz zu anderen amorphen Oxiden wie z.B. pyrogener Kieselsäure und Fällungskieselsäure liegen die Primärpartikel im Mikrosilica zum größten Teil nicht als Aggregate vor, sondern als isolierte Kugeln, die vollständig dispergierbare Agglomerate bilden.

Die Bestimmung der gewichtsmittleren Größe der Primärpartikel des Mikrosilica erfolgt vorzugsweise durch die Aufnahme und Analyse lichtmikroskopischer oder elektronenmikroskopischer Bilder (vgl. auch die vorstehende Diskussion zur Bestimmung der Sphärizität der Partikel des partikulären, amorphen Oxids). Moderne handelsübliche elektronenmikroskopische oder lichtmikroskopische Systeme ermöglichen dabei eine digitale Bildanalyse und somit eine komfortable Bestimmung der der gewichtsmittleren Größe der Primärpartikel des Mikrosilica. Die digitale Bildanalyse ist für Untersuchungen zur gewichtsmittleren Größe der Primärpartikel des Mikrosilica bevorzugt. Die digitale Bildanalyse wird vorzugsweise mittels kommerzieller Bildanalysesoftware, wie z.B. der Image-Pro Plus Software von Media Cybernetics, durchgeführt. Bei der Probenpräparation für die digitale Bildanalyse ist auf eine zufällige Orientierung der Partikel zu achten. Gegebenenfalls sind Dünnschliffe herzustellen.

Sofern die Primärpartikel des Mikrosilica als Agglomerate und/oder Aggregate und/oder in anderer Weise als Zusammenschlüsse mehrerer Partikel vorliegen, werden diese vor Durchführung der Bestimmung der gewichtsmittleren Größe der Primärpartikel vorzugsweise auf an sich bekannte Weise (z.B. durch Ultraschallbehandlung) schonend mechanisch oder in ähnlicher Weise getrennt, um eine Verfälschung des Ergebnisses soweit wie möglich auszuschließen.

Bezüglich der vorteilhaften Wirkung, welche mit dem Einsatz eines Gesamtanteils von 85 Gew.-% oder mehr an einem oder sämtlichen der vorstehend genannten bevorzugten partikulären, amorphen Oxide des Bestandteils (a), bevorzugt 90 Gew.-% oder mehr, besonders bevorzugt 95 Gew.-% oder mehr, jeweils bezogen auf die Gesamtmenge des partikulären amorphen Oxids des Bestandteils (a), verbunden ist, sei auf die vorstehende Diskussion zur vorteilhaften Wirkung eines hohen Anteils an Siliziumdioxid verwiesen, die hier entsprechend zutrifft, *mutatis mutandis.*

Eine weitere bevorzugte Ausführungsform ist eine erfindungsgemäß oder bevorzugt erfindungsgemäß zu verwendende Schlichtezusammensetzung, wobei die Partikel des partikulären, amorphen Oxids des Bestandteils (a) eine puzzolanische Aktivität besitzen. Dies bedeutet, dass solche Partikel dazu befähigt sind, mit Calciumhydroxid in Gegenwart von Wasser zu reagieren.

Diese puzzolanische Aktivität beeinflusst die Haftung des Schlichteüberzugs am Gussrohr positiv.

Vorzugsweise wird als partikuläres, amorphes Oxid des Bestandteils (a) mit puzzolanischer Aktivität Mikrosilica verwendet, welches aufgrund seiner geringen Partikelgröße und seines amorphen Charakters eine hohe Puzzolanaktivität besitzt.

Des Weiteren bevorzugt ist eine erfindungsgemäß oder bevorzugt erfindungsgemäß zu verwendende Schlichtezusammensetzung,

wobei die Schlichtezusammensetzung eine Gesamtmenge im Bereich von 4 bis 25 Gew-% partikuläres, amorphes Oxid des Bestandteils (a) umfasst, bezogen auf die Gesamtmasse der Schlichtezusammensetzung, bevorzugt eine Gesamtmenge im Bereich von 4 bis 20 Gew.-% und/oder

wobei der Gesamtanteil an partikulären, amorphen Oxiden des Bestandteils (a) kleiner ist als 50 Gew.-%, bezogen auf die Gesamtmenge der Feuerfeststoffe in der Schlichtezusammensetzung, vorzugsweise kleiner ist als 25 Gew.-%.

Die mit der vorliegenden Erfindung verknüpften vorteilhaften Eigenschaften werden bereits mit den vorstehend genannten (niedrigen) Gesamtmengen an partikulärem, amorphem Oxid in der erfindungsgemäß zu verwendenden Schlichtezusammensetzung erreicht (vgl. die erfindungsgemäßen Beispiele weiter unten).

Ebenfalls bevorzugt ist eine erfindungsgemäß oder bevorzugt erfindungsgemäß zu verwendende Schlichtezusammensetzung, umfassend

eine oder mehrere oberflächenaktive Substanzen (Netzmittel), vorzugsweise einen oder mehrere Schaumbildner, vorzugsweise einen oder mehrere Schaumbildner ausgewählt aus der Gruppe bestehend aus anionischen, kationischen und nichtionischen Schaumbildnern,

bevorzugt ein oder mehr anionische und/oder ein oder mehr kationische Schaumbildner,

wobei vorzugsweise der Gesamtanteil an anionischen und kationischen Schaumbildnern kleiner ist als 0,5 Gew.-%, bezogen auf die Gesamtmasse der Schlichtezusammensetzung,

besonders vorzugsweise der Gesamtanteil an Schaumbildnern ausgewählt aus der Gruppe bestehend aus anionischen, kationischen und

nichtionischen Schaumbildnern kleiner ist als 0,5 Gew.-%, bezogen auf die Gesamtmasse der Schlichtezusammensetzung,

ganz besonders vorzugsweise der Gesamtanteil an Schaumbildnern kleiner ist als 0,5 Gew.-%, bezogen auf die Gesamtmasse der Schlichtezusammensetzung.

Oberflächenaktive Substanzen, vorzugsweise Schaumbildner, werden vorteilhaft eingesetzt, um eine bessere Benetzung der Innenwandung der Schleudergusskokille zu erzielen. Dem Fachmann sind ionische und nichtionische oberflächenaktive Substanzen bekannt. Beispielsweise werden als ionische oberflächenaktive Substanzen Dioctylsulfosuccinate und als nichtionische oberflächenaktive Substanzen Alkindiole bzw. ethoxylierte Alkindiole eingesetzt, welche auch im Rahmen der vorliegenden Erfindung geeignet sind.

Der Einsatz entsprechender oberflächenaktiver Substanzen in erfindungsgemäß zu verwendenden Schlichtezusammensetzungen ist besonders vorteilhaft, da diese Substanzen die Oberflächenspannung der wässrigen Phase

reduzieren, wodurch sowohl die Erzeugung der Oberflächenstruktur des Schlichteüberzugs auf der Innenwandung der Schleudergusskokille als auch das Ziehverhalten des herzustellenden Gussrohres positiv beeinflusst werden können.

Ebenfalls bevorzugt ist eine erfindungsgemäß zu verwendende Schlichtezusammensetzung,

wobei der Anteil an kristallinem Siliziumdioxid kleiner ist als 3 Gew.-%, bezogen auf die Gesamtmasse der Schlichtezusammensetzung und/oder

wobei der Gesamtanteil an Zirkonsilikaten (auch bezeichnet als Zirconiumsilicat, Zirconiumsilikat oder Zirkon) und Zirkonoxid kleiner ist als 7 Gew.-%, bezogen auf die Gesamtmasse der Schlichtezusammensetzung und/oder

wobei der Anteil an Korund kleiner ist als 5 Gew.-%, bezogen auf die Gesamtmasse der Schiichtezusammensetzung und/oder

wobei der Anteil an Feuerfeststoffen in einer Mohs-Härte von mehr als 7 kleiner ist als 5 Gew.-%, bezogen auf die Gesamtmasse der Schlichtezusammensetzung
und/oder

wobei der Anteil an Diatomeenerde kleiner ist als 10 Gew.-%, bezogen auf die Gesamtmenge des partikulären, amorphen Oxids des Bestandteils (a).

Wie vorstehend bereits erläutert, wird durch einen zu hohen Anteil an harten Feuerfeststoffen innerhalb einer Schlichtezusammensetzung der Verschleiß der eingesetzten Schleudergusskokille beschleunigt, da ein hoher Anteil an harten Feuerfeststoffen innerhalb der Schlichtezusammensetzung eine starke Abrasion an der Kokilleninnenwandung während des Extrahierens des gegossenen Rohres aus der Schleudergusskokille bewirkt. Entsprechend ist im Rahmen der vorliegenden Erfindung die Verwendung von Schlichtezusammensetzungen bevorzugt, in welchen der Anteil an harten, abrasiven Feuerfeststoffen in ihrer Menge begrenzt ist. Eine Begrenzung des Anteils an harten, abrasiven Feuerfeststoffen innerhalb der erfindungsgemäß zu verwendenden Schlichtezusammensetzung sorgt folglich für eine Schonung der Schleudergusskokille, wodurch gleichzeitig die Haltbarkeit der Schleudergusskokille erhöht wird.

Diatomeenerde (auch bezeichnet als Diatomit oder Kieselgur) ist eine weißliche, pulverförmige Substanz, die hauptsächlich aus den Schalen fossiler Diatomeen (Kieselalgen) besteht und einen üblichen aus dem Stand der Technik bekannten Feuerfeststoff darstellt. Vorzugsweise ist der Anteil an Diatomeenerde in erfindungsgemäß zu verwendenden Schlichtezusammensetzungen mit weniger als 10 Gew.-%, bezogen auf die Gesamtmenge des partikulären, amorphen Oxids des Bestandteils (a) gering, da mit dem Einsatz von Diatomeenerde mehrere Nachteile verbunden sind. So ist der Einsatz von Diatomeenerde z.B. aus gesundheitlichen Aspekten problematisch, da der Staub (kalzinierter) Diatomeenerde zu den Silikose-verursachenden kristallinen Quarzstäuben zu zählen ist. Des Weiteren führt der Einsatz von Diatomeenerde zu einer nachteiligen Erhöhung der Viskosität der Schlichtezusammensetzung, da Diatomeenerde eine im Vergleich zum erfindungsgemäßen partikulären, amorphen Oxid des Bestandteils (a) geringere Sphärizität aufweist. Zudem verfügt Diatomeenerde aufgrund seiner Porosität von etwa 85% über ein hohes Wasseraufnahmevermögen, wodurch beim Einsatz von Diatomeenerde der erfindungsgemäß angestrebte niedrige Glühverlust der Schlichtezusammensetzung negativ beeinflusst wird.

Bevorzugt ist weiterhin eine erfindungsgemäß zu verwendende Schlichtezusammensetzung, umfassend ein anorganisches Bindemittel, das vorzugsweise ausgewählt ist aus der Gruppe bestehend aus Phosphaten, Wassergläsern, Kieselsolen und deren Mischungen,

wobei die Wassergläser vorzugsweise ausgewählt sind aus der Gruppe bestehend aus Alkaliwassergläsern
und/oder

wobei die Phosphate vorzugsweise ausgewählt sind aus der Gruppe bestehend aus Orthophosphaten, Polyphosphaten und deren Mischungen, besonders vorzugsweise aus der Gruppe bestehend aus Orthophosphaten, Metaphosphaten und deren Mischungen, ganz besonders vorzugsweise aus der Gruppe bestehend aus Aluminiumphosphaten, Polyphosphaten und deren Mischungen, am bevorzugtesten aus der Gruppe bestehend aus Aluminiumphosphaten, Metaphosphaten und deren Mischungen,
und/oder

wobei das gewichtsmittlere Molekulargewicht Mw der Phosphate vorzugsweise größer ist als 300 g/mol, besonders vorzugsweise größer ist als 600 g/mol.

Schlichtebindemittel (Bindemittel) dienen vor allem dazu, die in der Schlichtezusammensetzung enthaltenen

Feuerfeststoffe auf der Innenwandung der Schleudergusskokille zu fixieren. Bindemittel können sowohl organischer als auch anorganischer Natur sein. Zur Realisierung eines möglichst niedrigen Glühverlustes der Schlichtezusammensetzung werden im Rahmen der vorliegenden Erfindung bevorzugt anorganische Bindemittel eingesetzt.

Als Kieselsole werden wässrige Lösungen von annähernd kugelförmigen, kolloidal gelösten Polykieselsäure-Molekülen bezeichnet, wobei der Gehalt an Siliziumdioxid typischerweise 30 bis 60 Gew.-% beträgt, bezogen auf die Gesamtmasse des Kieselsols. Die Herstellung von Kieselsolen kann durch Behandeln einer wässrigen Alkalisilikat-Lösung (Wasserglas) mit Ionenaustauschern und nachfolgender Stabilisierung mittels einer mit Wasser alkalisch reagierenden Substanz erfolgen.

Als Alkaliwasserglas werden aus einer Schmelze erstarrte, glasartige (also amorphe) wasserlösliche Natrium-, Kalium- und Lithiumsilikate, ihre Mischungen sowie die entsprechenden wässrigen Lösungen bezeichnet. Der Begriff "Wasserglas" bezeichnet solche amorphen, wasserlöslichen Natrium-, Kalium- und/oder Lithiumsilikate und/oder deren wässrige Lösungen und/oder Mischungen der vorgenannten Silikate und/oder deren Lösungen, die jeweils ein molares Modul (molares Verhältnis) von $SiO_2$ zu $M_2O$ im Bereich von 1,6 bis 4,0, vorzugsweise im Bereich von 1,8 bis 2,5 aufweisen, wobei $M_2O$ die Gesamtmenge an Lithium-, Natrium- und Kaliumoxid bezeichnet.

Als Orthophosphate werden im Rahmen der vorliegenden Erfindung Salze und Ester der Phosphorsäure bezeichnet, wobei die Wasserstoff-Ionen der Phosphorsäure vollständig oder teilweise durch Metall-Ionen oder organische Reste ersetzt sind. Als Polyphosphate werden entsprechend im Rahmen der vorliegenden Erfindung Salze und Ester der Polyphosphorsäure bezeichnet, welche typischerweise aus zwei oder mehr Hydrogenphosphaten durch intermolekularen Wasserentzug (Kondensation) unter Bildung von P-O-P-Brücken entstehen. Polyphosphate können sowohl geradkettig als auch verzweigt bzw. ringförmig vorliegen. Ringförmig kondensierte Polyphosphate werden im Allgemeinen, wie auch im Rahmen der vorliegenden Erfindung, als Metaphosphate oder cyclo-Polyphosphate bezeichnet. Die Verwendung von Metaphosphaten (cyclo-Polyphosphaten) in erfindungsgemäß zu verwendenden Schlichtezusammensetzungen ist bevorzugt. Unter Aluminiumphosphaten werden im Rahmen der vorliegenden Erfindung aluminiumhaltige Phosphat-Verbindungen, wie z.B. Aluminiumorthophosphat, Aluminiummetaphosphat, Aluminiumdihydrogenphosphat und Aluminiumpolyphosphate, verstanden.

Ebenfalls bevorzugt ist eine erfindungsgemäß zu verwendende Schlichtezusammensetzung, umfassend ein oder mehrere rheologische Additive, vorzugsweise Verdickungsmittel, besonders vorzugsweise organische Verdickungsmittel, bevorzugt ausgewählt aus der Gruppe bestehend aus Polysacchariden, Proteinen und Celluloseethern, oder anorganische Verdickungsmittel, bevorzugt ausgewählt aus der Gruppe bestehend aus Tonmineralien wie Bentonite, Smectite, Attapulgite und Montmorillonite.

Rheologische Additive, wie z.B. Verdickungsmittel, werden eingesetzt, um die für die Verarbeitung gewünschte Fließfähigkeit der Schlichtezusammensetzung einzustellen. Verdickungsmittel können sowohl organischer als auch anorganischer Natur sein, wobei organische Verdickungsmittel im Rahmen der vorliegenden Erfindung bevorzugt sind.

Vorzugsweise ist der Anteil an Bentoniten oder Smectiten oder Attapulgiten oder Montmorilloniten, bevorzugt der Gesamtanteil an Tonmineralien wie Bentonite, Smectite, Attapulgite und Montmorillonite, besonders bevorzugt der Gesamtanteil an anorganischen Verdickungsmitteln, ganz besonders bevorzugt der Gesamtanteil an rheologischen Additiven,

kleiner als 6 Gew.-%, bezogen auf die Gesamtmasse des Feststoffanteils der erfindungsgemäß zu verwendenden Schlichtezusammensetzung, vorzugsweise kleiner als 3 Gew.-%, besonders vorzugsweise kleiner als 1,5 Gew.-% und/oder

so ausgewählt, dass dieser Anteil einen Glühverlust von weniger als 0,5 Gew.-% besitzt, bezogen auf die Gesamtmasse des Feststoffanteils der erfindungsgemäß zu verwendenden Schlichtezusammensetzung, bevorzugt einen Glühverlust von weniger als 0,4 Gew.-%, besonders bevorzugt von weniger als 0,3 Gew.-%.

Aufgrund des relativ hohen Glühverlustes von Tonmineralien wie Bentoniten, Smectiten, Attapulgiten und Montmorilloniten, der abhängig von stofflichen Eigenschaften im Einzelfall im Bereich von etwa 10 Gew.-% (bezogen auf die eingesetzte Masse des jeweiligen Tonminerals selbst) liegen kann (und sich negativ auf den Glühverlust der Gesamtmasse des Feststoffanteils der Schlichtezusammensetzung auswirkt), sind Schlichtezusammensetzungen mit dem vorstehend genannten niedrigen Anteil an entsprechenden Tonmineralien bevorzugt.

Außerdem bevorzugt ist eine erfindungsgemäß zu verwendende oder bevorzugte erfindungsgemäß zu verwendende Schlichtezusammensetzung, umfassend ein oder mehrere Biozide, vorzugsweise ein oder mehrere Bakterizide.

Der Einsatz von Bioziden soll im Rahmen der vorliegenden Erfindung einem Befall der Schlichtezusammensetzungen mit Schädlingen vorbeugen. Der Einsatz von Bakteriziden dient dabei im Speziellen der Vorbeugung eines Befalls von Schlichtezusammensetzungen mit Bakterien. Beispiele für auch im Rahmen der vorliegenden Erfindung geeignete Biozide sind Formaldehyd, 2-Methyl-4-isothiazolin-3-on (MIT), 5-Chlor-2-methyl-4-iosthiazolin-3-on (CIT) und

1,2-Benzisothiazolin-3-on (BIT). Die Biozide, vorzugsweise die genannten individuellen Biozide, werden üblicherweise in einer Gesamtmenge von 10 bis 1000 ppm, vorzugsweise in einer Menge von 20 bis 500 ppm verwendet, jeweils bezogen auf die Gesamtmasse der Schlichtezusammensetzung.

Des Weiteren bevorzugt ist eine erfindungsgemäß zu verwendende Schlichtezusammensetzung, wobei die Schlichtezusammensetzung in der wässrigen Phase einen Alkohol mit einem Siedepunkt von weniger als 100 °C bei 1013 hPa umfasst, vorzugsweise in der wässrigen Phase Ethanol umfasst.

Vorzugsweise beträgt der Anteil des Alkohols in der wässrigen Phase weniger als 5 Gew.-%, bezogen auf die Gesamtmasse der Schlichtezusammensetzung, besonders vorzugsweise weniger als 3 Gew.-%, ganz besonders vorzugsweise zwischen 2 bis 3 Gew.-%. Der Einsatz eines Alkohols mit einem Siedepunkt von weniger als 100 °C bei 1013 hPa in der wässrigen Phase bewirkt eine Erhöhung der Trocknungsgeschwindigkeit der Schlichtezusammensetzung. Bezüglich der Verwendung von Alkoholen als Trägerflüssigkeit sei ebenfalls auf die vorstehende Diskussion zu Trägerflüssigkeiten verwiesen, die hier entsprechend zutrifft.

Ebenfalls bevorzugt ist eine erfindungsgemäß oder bevorzugt erfindungsgemäß zu verwendende Schlichtezusammensetzung, wobei der eine oder die mehreren weiteren Feuerfeststoffe des Bestandteils (b) einen oder mehrere Bestandteile umfassen, ausgewählt aus der Gruppe bestehend aus

- Hohlpartikel, die eine Sphärizität von größer als 0,9 besitzen, bestimmt durch Auswertung zweidimensionaler mikroskopischer Bilder, vorzugsweise Hohlpartikel (i) mit kristallinen Anteilen sowie vorzugsweise (ii) umfassend Siliziumdioxid oder Silikat,

wobei der Anteil an diesen Hohlpartikeln im Bereich von 0,1 bis 10 Gew.-% liegt, vorzugsweise im Bereich von 0,5 bis 6 Gew.-%, bezogen auf die Gesamtmasse der Schlichtezusammensetzung

- keramische Partikel, die eine Sphärizität von größer als 0,9 besitzen, bestimmt durch Auswertung zweidimensionaler mikroskopischer Bilder, vorzugsweise keramische Partikel (i) mit kristallinen Anteilen und/oder (ii) umfassend ein oder mehrere Oxide vorzugsweise ausgewählt aus der Gruppe bestehend aus Aluminiumoxid, Siliziumdioxid, Zirkonoxid und Calciumoxid,

besonders bevorzugt Vollpartikel und/oder Hohlkugeln, ganz besonders bevorzugt Cenosphären.

Die vorzugsweise in einer bevorzugten Ausgestaltung der erfindungsgemäß zu verwendenden Schlichtezusammensetzung im Bestandteil (b) enthaltenen Hohlpartikel und/oder keramischen Partikel, vorzugsweise keramischen Hohlpartikel, zählen definitionsgemäß nicht zu den partikulären, amorphen Oxiden des Bestandteils (a), wie vorstehend definiert, besitzen also nicht sämtliche der dazu erforderlichen Eigenschaften. Ein vorzugsweise in den Hohlpartikeln bzw. keramischen Partikeln enthaltene kristalline Anteil (welcher eine zumindest partiell ausgeprägte Fernordnung der Atome impliziert) ist mittels röntgendiffraktometrischer Untersuchungen nachweisbar.

Bezüglich der Definition und Bestimmung der Sphärizität sei auf die vorstehende Diskussion zur Sphärizität verwiesen, die hier entsprechend zutrifft.

Unter Hohlpartikeln, die eine Sphärizität von größer als 0,9 besitzen, werden kugelförmige oder nahezu kugelförmige Partikel verstanden, die im Inneren einen Hohlraum aufweisen, der 15% oder mehr, bevorzugt 40% oder mehr, besonders bevorzugt 70% oder mehr des Volumens des Partikels einnimmt. Dieser Hohlraum kann von einer Schale aus anorganischem Material vollständig umschlossen sein, wie im Falle von Hohlkugeln, oder unvollständig umschlossen sein.

Hohlkugeln bzw. keramische Hohlkugeln stellen im Rahmen der vorliegenden Erfindung eine bevorzugte Ausgestaltung von Hohlpartikeln und von keramischen Partikeln dar.

Cenosphären (Cenospheres CAS Nr.: 93924-19-7) sind bevorzugte Hohlkugeln, die sich bei der Verbrennung von Kohle in Kraftwerken als Teil der Flugasche (fly ash) bilden und dabei aus dem Rauchgasstrom abgeschieden werden. Bevorzugt weisen Cenosphären folgende Eigenschaften auf:

- Außendurchmesser im Bereich von 10 bis 150 μm,
- Hohlraum, der 70 % oder mehr des Gesamtvolumens der Hohlkugel einnimmt;
- Erweichungspunkt von 1200 °C bis 1450 °C,
- Mohs-Härte von 5 bis 6, und
- Druckfestigkeit von 25 MPa oder höher.

Keramische Vollpartikel, welche eine weitere bevorzugte Ausgestaltung von keramischen Partikeln darstellen, unterscheiden sich von keramischen Hohlpartikeln und insbesondere Hohlkugeln im Wesentlichen darin, dass Vollpartikel keinen bzw. nur geringfügige Hohlräume besitzen, wodurch Vollpartikel im Vergleich zu Hohlkugeln eine wesentlich kompaktere Form aufweisen.

Bevorzugt ist auch eine erfindungsgemäße Verwendung, wobei eine Schlichtezusammensetzung eingesetzt wird

mit einem Feststoffanteil von mehr als 69 Gew.-%, bezogen auf die Gesamtmasse der Schlichtezusammensetzung, und

mit einem Glühverlust von weniger als 0,6 Gew.-%, bevorzugt weniger als 0,5 Gew.-%, besonders bevorzugt weniger als 0,3 Gew.-%, bezogen auf die Gesamtmasse des Feststoffanteils der Schlichtezusammensetzung,

wobei die Schlichtezusammensetzung eine Dispersion von Feuerfeststoffen in einer wässrigen Phase ist, wobei die Feuerfeststoffe zumindest umfassen

1. (a)

   ◦ eine Gesamtmenge im Bereich von 4 bis 50 Gew.-% partikuläres, amorphes Oxid, bezogen auf die Gesamtmasse der Schlichtezusammensetzung,

      wobei das partikuläre, amorphe Oxid einen Anteil von 85 Gew.-% oder mehr Siliziumdioxid, vorzugsweise Mikrosilica, umfasst, bezogen auf die Gesamtmenge des partikulären, amorphen Oxids,

      wobei das partikuläre, amorphe Oxid einen massenbezogenen Wert $D_{95}$ von kleiner als 5 μm, vorzugsweise kleiner als 3 μm, besonders vorzugsweise kleiner als 2 μm, ganz besonders vorzugsweise kleiner als 1 μm besitzt, bestimmt mittels Laserbeugung,

      wobei das partikuläre, amorphe Oxid eine Porosität von kleiner als 50%, vorzugsweise kleiner als 25%, besonders vorzugsweise kleiner als 10% besitzt, bezogen auf die Gesamtmenge des partikulären amorphen Oxids, und

      wobei 90 Gew.-% oder mehr der Partikel des partikulären, amorphen Oxids eine Sphärizität von größer als 0,9, vorzugsweise größer als 0,95 besitzen, bestimmt durch Auswertung zweidimensionaler mikroskopischer Bilder,

   oder/beziehungsweise

   ◦ eine Gesamtmenge im Bereich von 4 bis 50 Gew.-% Mikrosilica als partikuläres, amorphes Oxid, bezogen auf die Gesamtmasse der Schlichtezusammensetzung,

und

2. (b) einen oder mehrere weitere Feuerfeststoffe,
wobei die Schlichtezusammensetzung umfasst:

   ◦ eine oder mehrere oberflächenaktive Substanzen,

   ◦ ein anorganisches Bindemittel, und

   ◦ ein oder mehrere rheologische Additive.

Als oberflächenaktive Substanzen werden vorzugsweise die oben angeführten oberflächenaktiven Substanzen eingesetzt. Als anorganisches Bindemittel werden vorzugsweise die oben angeführten anorganischen Bindemittel eingesetzt. Als rheologische Additive werden vorzugsweise die oben angeführten rheologischen Additive eingesetzt.

Die erfindungsgemäß zu verwendende Schlichtezusammensetzung ist vorzugsweise dazu vorgesehen und eingerichtet, unmittelbar, ohne Hinzufügen oder Entfernen von Bestandteilen, auf eine Schleudergusskokille appliziert zu werden. Die erfindungsgemäß zu verwendende Schlichtezusammensetzung kann aber auch als Konzentrat vorliegen, welches gegebenenfalls vor der Applikation auf eine Schleudergusskokille verdünnt wird, insbesondere durch Zugabe von Wasser oder einer organischen Trägerflüssigkeit. Eine Direktanwendung des Konzentrates (ohne Verdünnen) ist aber ebenfalls möglich und im Einzelfall sinnvoll. Dies gilt für sämtliche Ausgestaltungen der vorliegenden Erfindung, sofern nicht anders angegeben oder spezifiziert.

Ein weiterer Gegenstand der vorliegenden Erfindung ist die Verwendung einer vorstehend beschriebenen erfindungsgemäß zu verwendenden Schlichtezusammensetzung, einschließlich ihrer als bevorzugt angegebenen Ausführungsformen, zur Herstellung eines Schlichteüberzugs auf der Innenwandung einer (beispielsweise nicht-entlüfteten) Schleudergusskokille mittels eines Sprühauftrags, wobei der Schlichteüberzug auf der Innenwandung der Schleudergusskokille eine Negativstruktur besitzt, für die Herstellung eines metallischen Gussstücks mit strukturierter Oberfläche, insbesondere für die Herstellung eines metallischen Gussstücks mit einer zur Negativstruktur auf der Innenwandung der Schleudergusskokille komplementären Positivstruktur.

Bevorzugt ist eine Ausführungsform der erfindungsgemäßen Verwendung, wobei der Sprühauftrag zumindest in Bereichen der Innenwandung zwei- oder mehrschichtig erfolgt, wobei der Auftrag der zweiten oder zumindest einer der weiteren Schichten auf eine zuvor aufgetragene, vorzugsweise nicht vollständig getrocknete Schicht des Schlichteüberzugs erfolgt.

Wie vorstehend bereits erläutert, können zur Auftragung der gewünschten Schlichtemenge zwei oder mehrere Schichten der erfindungsgemäß bzw. der bevorzugt erfindungsgemäß zu verwendenden Schlichtezusammensetzung auf die Innenwandung einer Schleudergusskokille appliziert werden, wobei die Schlichtezusammensetzung bei der Auftragung von zwei oder mehreren Schichten vorzugsweise sowohl im Vorlauf als auch im Rücklauf auf die Innenwandung der Schleudergusskokille appliziert wird. Die Durchführung eines zwei- oder mehrschichtigen Sprühauftrags erlaubt unter anderem eine variable Einstellung der Schichtdicke des auf der Innenwandung einer Schleudergusskokille mittels eines Sprühauftrags hergestellten Schlichteüberzugs, wodurch z.B. die Isolierwirkung wie auch die Oberflächenstrukturierung des Schlichteüberzugs vorteilhaft beeinflusst werden können.

Gegenstand der Erfindung ist auch ein Verfahren zur Herstellung einer innenwandig mit einem Schlichteüberzug versehenen Schleudergusskokille zur Verwendung im Schleudergussverfahren, mit den Schritten:

- Bereitstellen oder Herstellen einer erfindungsgemäß und/oder einer bevorzugt erfindungsgemäß zu verwendenden Schlichtezusammensetzung wie vorstehend und/oder in den Ansprüchen offenbart,
- Applizieren einer oder mehrerer Schichten der bereitgestellten oder hergestellten Schlichtezusammensetzung auf die Innenwandung der (beispielsweise nicht-entlüfteten) Schleudergusskokille, vorzugsweise bei rotierender und/oder erhitzter Schleudergusskokille, wobei vorzugsweise der resultierende Schlichteüberzug zumindest nach dem Trocknen eine Negativstruktur für die Herstellung eines Gussstücks mit strukturierter Oberfläche bzw. für die Herstellung eines Gussstücks mit zur jeweiligen Negativstruktur komplementären Positivstruktur besitzt.

Die im ersten Schritt des erfindungsgemäßen Verfahrens bereitgestellte oder hergestellte Schlichtezusammensetzung und die im Rahmen der erfindungsgemäßen Verwendung verwendete Schlichtezusammensetzung werden vorzugsweise wie folgt hergestellt:

- Bereitstellen einer Menge an wässriger Phase,
- Bereitstellen einer Menge von Feuerfeststoffen (a) und Feuerfeststoffen (b) (wie vorstehend und in den Ansprüchen im Zusammenhang mit der erfindungsgemäßen Verwendung und den erfindungsgemäßen Verfahren offenbart)
- Herstellen einer Dispersion aus den bereitgestellten Feuerfeststoffen (a), den Feuerfeststoffen (b) und der wässrigen Phase, vorzugsweise unter Rühren, wobei vorzugsweise Aggregate und/oder Agglomerate von einem oder mehreren der Feuerfeststoffe (a) und/oder einem oder mehreren der weiteren Feuerfeststoffe (b) vor, während und/oder nach Kontakt mit der wässrigen Phase aufgetrennt werden, vorzugsweise zu Primärpartikeln vereinzelt werden,
- vorzugsweise Zugabe eines oder mehrerer weiterer Bestandteile (z.B. rheologische Additive, anorganisches Bindemittel, Biozide, oberflächenaktive Substanzen, Schaumregulatoren, Pigmente, Farbstoffe, etc.) zu der Menge an wässriger Phase und/oder zu der hergestellten Dispersion, besonders bevorzugt unter Rühren,
- vorzugsweise Zugabe einer Menge an wässriger und/oder alkoholischer Phase zu der hergestellten Dispersion, besonders bevorzugt unter Rühren,

so dass die Schlichtezusammensetzung resultiert.

Zur Herstellung einer erfindungsgemäß zu verwendenden Schlichtezusammensetzung kann beispielsweise Wasser in geeigneter Menge vorgelegt werden und die weiteren Bestandteile zur Herstellung der Schlichtezusammensetzung können dann in jeweils gewünschter Menge zu dieser Vorlage unter Rühren mit einem geeigneten Rührer wie einem hochscherenden Rührer, z.B. einem Zahnradrührer oder einem Dissolverrührer, hinzugegeben werden. Sofern nötig, können Bestandteile vor oder während der Zugabe auf an sich bekannte Weise aufgeschlossen werden. So können z.B. gegebenenfalls ein oder mehrere rheologische Additive unter Einsatz eines hochscherenden Rührers, vor oder nach

Hinzugabe zu der Wasser-Vorlage und einzeln oder zusammen mit den Feuerfeststoffen, aufgeschlossen werden. Sofern die Feuerfeststoffe nicht gemeinsam mit den gegebenenfalls zugegebenen rheologischen Additiven aufgeschlossen werden, können sie auch einzeln aufgeschlossen und zu der Wasser-Vorlage hinzugegeben werden. Anschließend können dann z.B. die weiteren Bestandteile der Schlichtezusammensetzung zu der - gegebenenfalls rheologische Additive und/oder Feuerfeststoffe enthaltenden - Wasser-Vorlage in beliebiger Reihenfolge und vorzugsweise unter Rühren, vorzugsweise mit einem hochscherenden Rührer, hinzugegeben werden, so etwa gegebenenfalls ein anorganisches Bindemittel, gegebenenfalls ein oder mehrere Biozide, gegebenenfalls ein oder mehrere oberflächenaktive Substanzen, gegebenenfalls ein oder mehrere Schaumregulatoren, gegebenenfalls ein oder mehrere Pigmente und/oder gegebenenfalls ein oder mehrere Farbstoffe.

Die im ersten Schritt des erfindungsgemäßen Verfahrens bereitgestellte oder hergestellte Schlichtezusammensetzung ist vorzugsweise dazu vorgesehen, unmittelbar für die Herstellung eines Schlichteüberzugs auf der Innenwandung einer Schleudergusskokille mittels eines Sprühauftrags verwendet zu werden. Alternativ kann die Schlichtezusammensetzung auch in an sich bekannter Weise zuerst als Konzentrat hergestellt werden, welches erst später, z.B. erst kurz vor der erfindungsgemäßen Verwendung der Schlichtezusammensetzung, z.B. durch weitere Zugabe von Wasser oder organischen Trägerflüssigkeiten, auf eine für den Einsatzzweck bzw. die vorbestimmte Applikationstechnik geeignete Konzentration (mit einer für die Aufbringung mittels Sprühauftrags geeigneten Viskosität) verdünnt wird, die sich dann für den jeweiligen Einsatzzweck bzw. die vorbestimmte Applikationstechnik unmittelbar zum Applizieren auf die Innenwandung einer Schleudergusskokille zur Herstellung eines Schlichteüberzugs eignet. Sofern im Rahmen der vorliegenden Erfindung Mengen oder Verhältnisse bezüglich der erfindungsgemäß verwendeten Schlichtezusammensetzung angegeben sind, beziehen sich diese Mengen bzw. Verhältnisse jeweils auf eine Schlichtezusammensetzung, die dazu vorgesehen ist, unmittelbar auf der Innenwandung einer Schleudergusskokille mittels eines Sprühauftrags appliziert zu werden, soweit nicht ausdrücklich anders angegeben. Es ist in der Regel nicht notwendig, die einzelnen Bestandteile der erfindungsgemäß zu verwendenden Schlichtezusammensetzung erst unmittelbar vor einem bestimmungsgemäßen Beschichtungsvorgang auf Schleudergusskokillen miteinander zu vermischen, vielmehr kann das Vermischen sehr viel früher erfolgen, weil die Lagerstabilität der erfindungsgemäß zu verwendenden Schlichtezusammensetzung vorteilhafterweise hoch ist.

Bezüglich des Applizierens von einer oder mehrerer Schichten der im ersten Schritt bereitgestellten oder hergestellten Schlichtezusammensetzung auf die Innenwandung der Schleudergusskokille (mittels eines Sprühauftrags) sowie bezüglich der Trocknung der applizierten Schlichtezusammensetzung sei auf die vorstehenden Ausführungen zur Auftragung und Trocknung von mittels eines Sprühauftrags applizierten Schlichtezusammensetzungen verwiesen, die hier entsprechend zutreffen.

Gegenstand der Erfindung ist auch ein Verfahren zur Herstellung eines Gussstücks im Schleudergussverfahren, umfassend die Schritte:

- Bereitstellen oder Herstellen einer erfindungsgemäß und/oder einer bevorzugt erfindungsgemäß zu verwendenden Schlichtezusammensetzung wie vorstehend und/oder in den Ansprüchen offenbart,
- Applizieren einer oder mehrerer Schichten der bereitgestellten oder hergestellten Schlichtezusammensetzung auf die Innenwandung einer (beispielsweise nicht-entlüfteten) Schleudergusskokille zur Herstellung eines Schlichteüberzugs (bis zu diesem Zeitpunkt entsprechen die durchgeführten Verfahrensschritte denen aus dem erfindungsgemäßen Verfahren zur Herstellung einer innenwandig mit einem Schlichteüberzug versehenen Schleudergusskokille zur Verwendung im Schleudergussverfahren),
- Einfüllen des Gussmetalls in die innenwandig beschichtete und rotierende Schleudergusskokille,
- Erstarrenlassen des Gussstücks in der rotierenden Schleudergusskokille,
- Extrahieren des Gussstücks aus der Schleudergusskokille, vorzugsweise zusammen mit dem Schlichteüberzug oder mit Teilen des Schlichteüberzugs, wobei der Schlichteüberzug vorzugsweise nicht an der Schleudergusskokille kleben bleibt bzw. mechanisch entfernt werden muss, sondern bevorzugt zu 90 Gew.-%, besonders bevorzugt zu 98 Gew.-% mit dem Gussstück extrahiert wird,

wobei das Applizieren vorzugsweise bei rotierender und/oder erhitzter Schleudergusskokille erfolgt
und
wobei vorzugsweise der Schlichteüberzug zumindest nach dem Trocknen eine Negativstruktur für die Herstellung eines Gussstücks mit strukturierter Oberfläche bzw. für die Herstellung eines Gussstücks mit zur jeweiligen Negativstruktur komplementären Positivstruktur und das Gussstück eine entsprechende strukturierte Oberfläche bzw. Positivstruktur besitzt.

Abhängig von der im Einzelfall ausgewählten Schleudergusskokille wird durch entsprechende Auswahl der erfindungsgemäß zu verwendenden Schlichtezusammensetzung die Extraktion des Schlichteüberzugs in der gewünschten Weise beeinflusst bzw. sichergestellt.

Gegenstand der Erfindung ist auch eine Schleudergusskokille zur Verwendung im Schleudergussverfahren, mit einem Schlichteüberzug auf der Innenwandung der Schleudergusskokille,

wobei der Schlichteüberzug aus einer getrockneten Schlichtezusammensetzung besteht, wobei die (nicht getrocknete) Schlichtezusammensetzung oben und/oder in den Ansprüchen definiert ist,
wobei vorzugsweise der Schlichteüberzug aus den bei 1013 hPa und einer Temperatur von 105 °C, vorzugsweise 200 °C, nicht verdampfbaren Bestandteilen einer erfindungsgemäß und/oder einer bevorzugt erfindungsgemäß zu verwendenden Schlichtezusammensetzung (wie oben offenbart) besteht
und/oder
wobei vorzugsweise der Schlichteüberzug eine Negativstruktur für die Herstellung eines Gussstücks mit strukturierter Oberfläche besitzt

und/oder

wobei die Schleudergusskokille (mit einem Schlichteüberzug auf ihrer Innenwandung) herstellbar ist nach dem erfindungsgemäßen Verfahren zur Herstellung einer innenwandig mit einem Schlichteüberzug versehenen Schleudergusskokille zur Verwendung im Schleudergussverfahren, wie oben und/oder in den Ansprüchen offenbart
und/oder
wobei die Schleudergusskokille (mit einem Schlichteüberzug auf ihrer Innenwandung) herstellbar ist gemäß der erfindungsgemäßen und/oder einer bevorzugt erfindungsgemäßen Verwendung einer Schlichtezusammensetzung zur Herstellung eines Schlichteüberzugs auf der Innenwandung einer Schleudergusskokille mittels eines Sprühauftrags, wie oben und/oder in den Ansprüchen offenbart.

**Beispiele:**

Die nachstehend angegebenen Beispiele sollen die Erfindung näher beschreiben und erklären, ohne ihren Umfang zu beschränken.

**Beispiel 1: Herstellung von erfindungsgemäß und nicht erfindungsgemäß zu verwendenden Schlichtezusammensetzungen zur Herstellung eines Schlichteüberzugs auf der Innenwandung einer Schleudergusskokille mittels eines Sprühauftrags.**

Es wurden die in Tabelle 1 angegebenen erfindungsgemäß zu verwendenden Schlichtezusammensetzungen SZ1 bis SZ3 zur Herstellung eines Schlichteüberzugs auf der Innenwandung einer Schleudergusskokille mittels eines Sprühauftrags sowie die ebenfalls in Tabelle 1 angegebene nicht erfindungsgemäß zu verwendende Schlichtezusammensetzung SS1 auf an sich bekannte Weise durch Vermischen der jeweils angegebenen Inhaltsstoffe hergestellt: Hierzu wurde jeweils in einem geeigneten Eimer die benötigte Menge an Wasser vorgelegt (Ansatzgröße jeweils ca. 5 kg Schlichtezusammensetzung), die Verdickungsmittel (Polysaccharid, Smectit) und die Feuerfeststoffe (Mullit, Mikrosilica, amorphes Quarzglas, Cenosphären) hinzugegeben und anschließend mit einem hochscherenden Dissolverrührer 3 min lang auf an sich bekannte Weise aufgeschlossen. Als nächstes wurden das anorganische Bindemittel (Gemisch aus Phosphaten und Polyphosphaten) sowie das Biozid (2-Methyl-4-isothiazolin-3-on, 2,5%-ige w/w wässrige Lösung) in den in Tabelle 1 angegebenen Mengenverhältnissen zugegeben und es wurde für weitere 2 Minuten mit einem hochscherenden Dissolverrührer gerührt. Als Letztes wurde die oberflächenaktive Substanz (Schaumbildner) zugegeben und mit einem Propellerrührer vorsichtig in die Dispersion eingerührt und homogen verteilt. Man erhielt jeweils die in Tabelle 1 angegebenen Schlichtezusammensetzungen in Form von Konzentraten.

Die erhaltenen Konzentrate werden gegebenenfalls vor der erfindungsgemäßen Verwendung, d.h. z.B. vor einer Sprühapplikation, auf eine für den Einsatzzweck bzw. die vorbestimmte Applikationstechnik geeignete Konzentration verdünnt, vorzugsweise durch Vermischen mit einer zusätzlichen Menge an Wasser, einem wässrigen Dispersionsmittel, Alkohol oder einem alkoholhaltigen Dispersionsmittel. Eine Direktanwendung (ohne Verdünnen) ist aber ebenfalls möglich und im Einzelfall sinnvoll.

Tabelle 1: Erfindungsgemäß zu verwendende Schlichtezusammensetzungen SZ1, SZ2 und SZ3 und nicht erfindungsgemäß zu verwendende Schlichtezusammensetzung SS1 (Konzentrate) zur Herstellung eines Schlichteüberzugs auf der Innenwandung einer Schleudergusskokille mittels eines Sprühauftrags:

| **Schlichtezusammensetzungen (Konzentrate, zur Anwendung in unverdünnter oder verdünnter Form):** | **SZ1** | **SZ2** | **SZ3** | **SS1** |
|---|---|---|---|---|
| Inhaltsstoffe: | [Gew.-%] | [Gew.-%] | [Gew.-%] | [Gew.-%] |
| Wasser | 26,06 | 28,384 | 27,63 | 28,384 |
| Partikuläres, amorphes Oxid des Bestandteils (a) (Mikrosilica, zirkonhaltig) | 10,0 | 9,7 | 10,5 | - |
| Erster weiterer Feuerfeststoff des Bestandteils (b) (amorphes Quarzglas; Sphärizität < 0,9; DIN 120 Vermahlung; Nennmaschenweite Analysensieb = 0,05 mm) | 20,0 | 41,3 | 36,8 | 46,3 |
| Zweiter weiterer Feuerfeststoff des Bestandteils (b) (Mullit; kristallin; DIN 125 Vermahlung; Nennmaschenweite Analysensieb = 0,045 mm) | 43,0 | 19,7 | 20,4 | 24,4 |
| Dritter weiterer Feuerfeststoff des Bestandteils (b) (Cenosphären, umfassend kristalline Anteile) | - | - | 3,8 | - |
| Anorganisches Bindemittel (Gemisch aus Orthophosphaten und Polyphosphaten) | 0,4 | 0,39 | 0,45 | 0,39 |
| Organisches Verdickungsmittel (Polysaccharid) | 0,04 | 0,038 | 0,02 | 0,038 |
| Anorganisches Verdickungsmittel (Smectit) | 0,3 | 0,29 | 0,2 | 0,29 |
| Biozid (2-Methyl-4-isothiazolin-3-on, 2,5%-ige w/w wässrige Lösung) | 0,15 | 0,15 | 0,15 | 0,15 |
| Oberflächenaktive Substanzen (Schaumbildner) | 0,050 | 0,048 | 0,05 | 0,048 |
| SUMME: | 100,0 | 100,0 | 100,0 | 100,0 |

Die Angaben zu "DIN-Vermahlungen" in Tabelle 1 bedeuten, dass der jeweils angegebene Bestandteil der Schlichtezusammensetzung im vermahlenen Zustand vorliegt, wobei nach dem Sieben einer Probe dieses Bestandteils mit einem Analysensieb mit einer Nennmaschenweite in μm (nach DIN ISO 3310-1:2001-09, vgl. die in Tabelle 1 angegebenen Nennmaschenweiten der Analysensiebe), jeweils ein Rückstand im Bereich von 1 bis 10 Gew.-% verbleibt, bezogen auf die eingesetzte Probenmenge.

Die nicht erfindungsgemäß zu verwendende Schlichtezusammensetzung SS1 umfasst kein Mikrosilica. SS1 ist zum direkten Vergleich mit SZ2 vorgesehen; die Zusammensetzungen unterscheiden sich qualitativ nur hinsichtlich der An- bzw. Abwesenheit des Mikrosilica. Die Gesamtmasse der Bestandteile (a) und (b) ist in SZ2 und SS1 ebenso konstant wie die individuellen Massen der sonstigen Bestandteile.

Eigenschaften (Feststoffanteil; Auslaufzeit) der in Tabelle 1 angegebenen Schlichtezusammensetzungen (Konzentrate) SZ1, SZ2, SZ3 und SS1 sind in Tabelle 2 angegeben.

Vor der eigentlichen Verwendung wurden die in Tabelle 1 angegebenen Schlichtezusammensetzungen (Konzentrate) SZ1, SZ2 und SS1 durch Zugabe von Ethanol, bzw. durch Zugabe von Ethanol und Wasser, und anschließendes Homogenisieren auf eine für den Sprühauftrag unter Verwendung einer Sprühlanze geeignete Viskosität verdünnt. Die jeweils für die Verdünnung verwendete Menge an Ethanol und Wasser, sowie Eigenschaften der nach Verdünnung erhaltenen erfindungsgemäß zu verwendenden Schlichtezusammensetzungen zur Herstellung eines Schlichteüberzugs auf der Innenwandung einer Schleudergusskokille mittels eines Sprühauftrags, sind ebenfalls in Tabelle 2 angegeben:

Tabelle 2: Eigenschaften der erfindungsgemäß zu verwendenden Schlichtezusammensetzungen (Konzentrate) SZ1, SZ2, SZ3 und der nicht erfindungsgemäß zu verwendenden Schlichtezusammensetzung SS1 aus Tabelle 1; Angaben zur Verdünnung der konzentrierten Schlichtezusammensetzungen SZ1, SZ2 und SS1; Eigenschaften der verdünnten erfindungsgemäß bzw. nicht erfindungsgemäß zu verwendenden Schlichtezusammensetzungen SZ1, SZ2 bzw. SS1.

| **Eigenschaften Schlichtezusammensetzungen (Konzentrate gemäß Tabelle 1):** | **SZ1** | **SZ2** | **SZ3** | **SS1** |
|---|---|---|---|---|
| Feststoffanteil (Gehalt an nichtflüchtigen Anteilen) [Gew.-%] | 73,7 | 71,9 | 72,2 | 71,6 |
| Auslaufzeit im 6 mm Becher [s] | 21,7 | 18,5 | 14,7 | nicht messbar, sehr viskos |
| Glühverlust [Gew.-%] | < 0,4 | < 0,4 | < 0,4 | < 0,4 |
| **Angaben zur Verdünnung der Konzentrate:** | **SZ1** | **SZ2** | **SZ3** | **SS1** |
| Konzentrat (gemäß Tabelle 1), Gewichtsteile | 100,0 | 100,0 | - | 100,0 |
| Ethanol, Gewichtsteile | 5,5 | 2,9 | - | 2,9 |
| Wasser, Gewichtsteile | - | - | - | 5,0 |
| **Eigenschaften der verdünnten Schlichtezusammensetzungen:** | **SZ1** | **SZ2** | **SZ3** | **SS1** |
| Feststoffanteil (Gehalt an nichtflüchtigen Anteilen) [Gew.-%] | 69,9 | 69,9 | - | 66,4 |
| Auslaufzeit im 6mm Becher [s] | 12,1 | 13,5 | - | 11,1 |
| Glühverlust [Gew.-%] | < 0,4 | < 0,4 | - | < 0,4 |

Die in Tabelle 2 angegebenen Schlichtezusammensetzungen SZ1, SZ2 und SZ3 (als Konzentrat; SZ1 und SZ2 auch in verdünnter Form; SZ3 auch ohne Verdünnung unmittelbar einsetzbar) entsprechen erfindungsgemäß zu verwendenden Schlichtezusammensetzungen wie vorstehend sowie in den Ansprüchen definiert. Die ebenfalls in Tabelle 2 angegebene Schlichtezusammensetzung SS1 stellt hingegen (sowohl in konzentrierter als auch in verdünnter Form) aufgrund der Abwesenheit von Mikrosilica eine nicht erfindungsgemäß zu verwendende Schlichtezusammensetzung dar. In der Tabelle werden nicht sämtliche Eigenschaften einer erfindungsgemäß zu verwendenden Schlichtezusammensetzung wiederholt, sondern nur ausgewählte Eigenschaften angegeben.

Die in Tabelle 2 angegebenen Feststoffanteile (Gehalte an nichtflüchtigen Anteilen) wurden gemäß der Standard-Prüfmethode DIN EN ISO 3251:2008-06 gemessen. Für die Durchführung des in DIN EN ISO 3251:2008-06 beschriebenen Verfahrens wurde im vorliegenden Fall eine Prüftemperatur von 150 °C, eine Prüfdauer von 30 min sowie eine Einwaage von 2,5 g festgelegt.

Die in Tabelle 2 angegebenen Auslaufzeiten wurden analog zu der Standard-Prüfmethode DIN 53211 in einem Becher mit 6-mm-Auslaufdüse der Firma ERICHSEN GmbH & Co. KG, D-58675 Hemer, Modell 243/II bestimmt. Vor der Messung wurden die Schlichtezusammensetzungen 5 min gerührt.

Die in Tabelle 2 angegebenen Glühverluste wurden gemäß der Standard-Prüfmethode EN 12879:2000 gemessen, wobei zum Glühen eine Temperatur von 900 °C (anstatt wie in EN 12879:2000 angegeben von 550 °C) verwendet wurde. Die bei der Bestimmung des Glühverlustes eingesetzten Trockenmassen, d.h. Feststoffanteile der Schlichtezusammensetzung, wurden durch Trocknen der jeweiligen Schlichtezusammensetzung gemäß DIN EN ISO 3251:2008-06 erhalten, wobei eine Prüftemperatur von 150 °C, eine Prüfdauer von 30 min sowie eine Einwaage von 2,5 g gewählt wurde.

Trotz des hohen Feststoffanteils von jeweils > 69 Gew.-% sind die Schlichtezusammensetzungen SZ1 (insbesondere verdünnt, vgl. Tabelle 2), SZ2 (insbesondere verdünnt, vgl. Tabelle 2) und SZ3 für die Herstellung eines Schlichteüberzugs auf der Innenwandung einer Schleudergusskokille mittels eines Sprühauftrags sehr gut geeignet. Durch den in Tabelle 2 angegebenen niedrigen Glühverlust und die damit einhergehende nur geringfügig ausgeprägte Bildung von Zersetzungsgasen während des Gussvorganges sind die Schlichtezusammensetzungen SZ1, SZ2 und SZ3 zudem für die erfindungsgemäße Verwendung in (nicht-entlüfteten) Schleudergusskokillen geeignet.

Die als Konzentrat hochviskose Schlichtezusammensetzung SS1 lässt sich erst nach starker Verdünnung mit Ethanol und Wasser (vgl. Tabelle 2) mittels eines Sprühauftrags applizieren; erst nach dieser starken Verdünnung ist nämlich die Viskosität ausreichend niedrig, um eine Versprühbarkeit zu erreichen, wie sie in SZ3 (unverdünnt) sowie in SZ1 und SZ2 (nur mit Ethanol verdünnt) vorliegt. Wegen der starken Verdünnung beträgt der Feststoffanteil der Schlichtezusammensetzung SS1 allerdings nur 66,4 Gew.-%. Aus diesem niedrigen Feststoffanteil der (verdünnten) Schlichtezusammensetzung SS1 resultiert eine nachteilig lange Trocknungszeit. Zudem lassen sich mit der (verdünnten) Schlichtezusammensetzung SS1 keine Schlichteüberzüge mit (gleichmäßiger) Negativstruktur herstellen, wie sie für die Herstellung von Gussstücken mit strukturierter Oberfläche benötigt werden.

**Beispiel 2: Verwendung der in Beispiel 1 beschriebenen erfindungsgemäß zu verwendenden Schlichtezusammensetzungen SZ2 und SZ3 zur Herstellung eines Schlichteüberzugs auf der Innenwandung einer Schleudergusskokille mittels eines Sprühauftrags und damit zur Herstellung einer erfindungsgemäßen Schleudergusskokille.**

Unter Verwendung der in Beispiel 1 beschriebenen Schlichtezusammensetzungen SZ2 (verdünnt, vgl. Tabelle 2) bzw. SZ3 (unverdünnt) wurde jeweils auf der Innenwandung einer Schleudergusskokille zur Herstellung von Zylinderlaufbuchsen, welche einen Innendurchmesser von ca. 80 mm und eine Gesamtlänge von ca. 2 m besaß, auf an sich bekannte Weise mittels eines Sprühauftrags ein Schlichteüberzug hergestellt.

Dabei wurde pro 125 mm Kokillenlänge eine Menge von ca. 110 g der Schlichtezusammensetzung SZ2 (verdünnt) mit Hilfe einer Sprühlanze auf der Innenwandung der rotierenden Schleudergusskokille appliziert, welche eine Temperatur von etwa 360 °C aufwies. Hierdurch wurde eine ausreichende Isolationswirkung erreicht.

Bei Verwendung der Schlichtezusammensetzung SZ3 (unverdünnt), welche ebenfalls auf eine etwa 360 °C heiße, rotierende Schleudergusskokille gleicher Abmessung appliziert wurde, genügte eine im Vergleich mit SZ2 um ca. 10% niedrigere Schlichtemenge (ca. 100 g pro 125 mm Kokillenlänge), um einen Schlichtüberzug mit ausreichend hoher Isolationswirkung zu erhalten.

Die Einsprühzeiten zum Applizieren der Schlichtezusammensetzungen SZ2 und SZ3 betrugen für die Beschichtung einer Kokillenlänge von 2 Metern jeweils 25 s. Die Trocknungszeiten der applizierten Schlichtezusammensetzungen waren jeweils ausreichend kurz, sodass die Zeit gemessen ab dem Beginn der jeweiligen Applikation der jeweiligen Schlichtezusammensetzungen bis zum Start des jeweiligen Gussvorgangs lediglich jeweils 35 s betrug. Die nach dem Trocknen der jeweiligen Schlichtezusammensetzungen resultierenden Schlichteüberzüge besaßen über die gesamte Länge der Schleudergusskokillen gleichmäßige Negativstrukturen, welche für die Herstellung von Gussstücken mit strukturierter Oberfläche hervorragend geeignet waren.

Derart hergestellte, innenwandig mit einem Schlichteüberzug versehenen Schleudergusskokillen zur Verwendung im Schleudergussverfahren sind erfindungsgemäße Schleudergusskokillen zur Verwendung im Schleudergussverfahren, mit einem Schlichteüberzug auf der Innenwandung der Schleudergusskokille, wie vorstehend sowie in den Ansprüchen definiert. Das vorliegende Beispiel ist auch ein Beispiel für ein erfindungsgemäßes Verfahren zur Herstellung einer innenwandig mit einem Schlichteüberzug versehenen Schleudergusskokille zur Verwendung im Schleudergussverfahren, wie vorstehend sowie in den Ansprüchen definiert.

**Beispiel 3: Herstellung eines Gussstückes im Schleudergussverfahren unter Verwendung einer erfindungsgemäßen Schleudergusskokille, mit einem Schlichteüberzug auf der Innenwandung der Schleudergusskokille.**

Unter Verwendung der gemäß Beispiel 2 hergestellten erfindungsgemäßen Schleudergusskokille mit dem unter Verwendung von Schlichtezusammensetzung SZ2 hergestellten Schlichteüberzug auf der Innenwandung, wurde im Schleudergussverfahren ein Gussstück, nämlich ein Rohr, mit strukturierter Oberfläche gefertigt, welches in einem

weiteren Prozessschritt zur Herstellung von Zylinderlaufbuchsen diente. Für die Fertigung des Rohres wurde das Gussmetall auf an sich bekannte Weise in die innenwandig beschichtete und rotierende Schleudergusskokille gefüllt. Nach dem Erstarren des Gussstückes in der rotierenden Schleudergusskokille wurde das entstandene Rohr zusammen mit dem Großteil des Schlichteüberzuges aus der Schleudergusskokille extrahiert.

Die Herstellung des Gussstückes gemäß den Beispielen 2 und 3 erfolgte somit insgesamt gemäß dem erfindungsgemäßem Verfahren zur Herstellung eines Gussstückes im Schleudergussverfahren wie vorstehend sowie in den Ansprüchen definiert.

Die Untersuchung des hergestellten Gussstückes nach der Entfernung des Schlichteüberzuges auf Basis der Schlichtezusammensetzung SZ2 ergab, dass die auf dem Rohr erzeugte Positivstruktur vorteilhafte Strukturen mit Hinterschneidungen sowie eine vorteilhafte Tiefe besaß, wobei die auf dem Rohr erzeugte strukturierte Oberfläche (Positivstruktur) zur Negativstruktur des Schlichteüberzuges komplementär war.

Die vorstehend beschriebene Herstellung eines Gussstückes mit strukturierter Oberfläche wurde im Verlauf einer Testserie 35 Mal wiederholt. Der jeweilige Anteil des während der Extraktionen der Gussstücke in der Schleudergusskokille verbleibenden Schlichteüberzuges war sehr niedrig und ließ sich, z.B. durch Ausblasen der Schleudergusskokille mit Pressluft oder durch Ausbürsten, leicht entfernen. Dabei entstand nur wenig Staub, der sich leicht absaugen ließ.

Nach dem Strahlen der hergestellten Rohre mit einem an sich bekannten, für das Strahlen von strukturierten Oberflächen mit Hinterscheidungen geeigneten Strahlmittel und dem anschließenden Schneiden der Rohre in Segmente verblieben auf der strukturierten Oberfläche der Segmente innerhalb der Testserie lediglich äußerst geringe Schlichtemengen. Messungen ergaben, dass lediglich auf etwa 6 bis 8 Flächen-% der Oberfläche der Segmente noch Schlichtepartikel nachweisbar waren. Zur Ermittlung der vorstehend genannten Messwerte wurden die strukturierten Oberflächen der Segmente mittels Auflichtmikroskopie untersucht und dabei die hellen (mit Schlichterückständen belegten) Flächen mit den dunklen (d.h. sauberen) Gussoberflächen verglichen.

Die nach dem Strahlen verbliebenen Mengen an Schlichte (auf den Oberflächen der Segmente) ließen sich in einem darauffolgenden Finish-Schritt leicht vollständig entfernen, da sie nicht fest am Gussstück hafteten.

Sowohl die Härte als auch die Gefügewerte sämtlicher im Verlauf der Testserie hergestellten Gussstücke entsprachen den Vorgaben.

## Patentansprüche

**1.** Verwendung einer Schlichtezusammensetzung

mit einem Feststoffanteil von mehr als 69 Gew.-%, bezogen auf die Gesamtmasse der Schlichtezusammensetzung,
und
mit einem Glühverlust von weniger als 0,6 Gew.-%, bezogen auf die Gesamtmasse des Feststoffanteils der Schlichtezusammensetzung,
wobei die Schlichtezusammensetzung eine Dispersion von Feuerfeststoffen in einer wässrigen Phase ist, wobei die Feuerfeststoffe zumindest umfassen

(a)

- eine Gesamtmenge im Bereich von 4 bis 50 Gew.-% partikuläres, amorphes Oxid, bezogen auf die Gesamtmasse der Schlichtezusammensetzung,

wobei das partikuläre, amorphe Oxid einen Anteil von 85 Gew.-% oder mehr Siliziumdioxid umfasst, bezogen auf die Gesamtmenge des partikulären, amorphen Oxids,
wobei das partikuläre, amorphe Oxid einen massenbezogenen Wert $D_{95}$ von kleiner als 5 $\mu$m besitzt, bestimmt mittels Laserbeugung,
wobei das partikuläre, amorphe Oxid eine Porosität von kleiner als 50% besitzt, bezogen auf die Gesamtmenge des partikulären amorphen Oxids, und
wobei 90 Gew.-% oder mehr der Partikel des partikulären, amorphen Oxids eine Sphärizität von größer als 0,9 besitzen, bestimmt durch Auswertung zweidimensionaler mikroskopischer Bilder,

oder
- eine Gesamtmenge im Bereich von 4 bis 50 Gew.-% Mikrosilica als partikuläres, amorphes Oxid, bezogen auf die Gesamtmasse der Schlichtezusammensetzung,

und
(b) einen oder mehrere weitere Feuerfeststoffe,

wobei 98 Gew.-% oder mehr der Gesamtmasse der Feuerfeststoffe dazu geeignet sind, ein Sieb mit einer Maschenweite von 0,75 mm zu passieren,
zur Herstellung eines Schlichteüberzugs auf der Innenwandung einer Schleudergusskokille mittels eines Sprühauftrags.

**2.** Verwendung nach Anspruch 1,

wobei das partikuläre, amorphe Oxid des Bestandteils (a) einen Glühverlust von weniger als 0,6 Gew.-% besitzt, bezogen auf die Gesamtmenge des partikulären, amorphen Oxids des Bestandteils (a), bevorzugt einen Glühverlust von weniger als 0,5 Gew.-%, besonders bevorzugt von weniger als 0,3 Gew.-%
und/oder
wobei

- die Schlichtezusammensetzung (i) Zirkonoxid, (ii) Kohlenstoff und/oder (iii) eine Lewis-Säure umfasst, vorzugsweise als Nebenbestandteile aus der Herstellung des partikulären, amorphen Oxids des Bestandteils (a),
und/oder
- das partikuläre, amorphe Oxid des Bestandteils (a) einen Anteil von 90 Gew.-% Siliziumdioxid oder mehr, vorzugsweise 95 Gew.-% oder mehr Siliziumdioxid umfasst, jeweils bezogen auf die Gesamtmenge des partikulären, amorphen Oxids des Bestandteils (a).

**3.** Verwendung nach einem der vorangehenden Ansprüche, wobei

90 Gew.-% oder mehr der Partikel des partikulären, amorphen Oxids des Bestandteils (a) eine Sphärizität von größer als 0,95 besitzen, bestimmt durch Auswertung zweidimensionaler mikroskopischer Bilder
und/oder
wobei das partikuläre, amorphe Oxid des Bestandteils (a) einen massenbezogenen Wert $D_{95}$ von kleiner als 3 $\mu$m, vorzugsweise kleiner als 2 $\mu$m, besonders vorzugsweise kleiner als 1 $\mu$m besitzt, bestimmt mittels Laserbeugung.

**4.** Verwendung nach einem der vorangehenden Ansprüche,

wobei das partikuläre, amorphe Oxid des Bestandteils (a) einen oder mehrere Bestandteile umfasst, ausgewählt aus der Gruppe bestehend aus

- Siliziumdioxidpartikel, die durch Versprühen einer Siliziumdioxidschmelze herstellbar sind, und
- Mikrosilica,

vorzugsweise einen Gesamtanteil von 85 Gew.-% oder mehr an einem oder sämtlichen dieser Bestandteile, bevorzugt 90 Gew.-% oder mehr, besonders bevorzugt 95 Gew.-% oder mehr, jeweils bezogen auf die Gesamtmenge des partikulären, amorphen Oxids des Bestandteils (a)
und/oder
wobei das partikuläre, amorphe Oxid des Bestandteils (a) einen Anteil von 85 Gew.-% oder mehr Mikrosilica umfasst, bevorzugt einen Anteil von 90 Gew.-% oder mehr, besonders bevorzugt einen Anteil von 95 Gew.-% oder mehr, jeweils bezogen auf die Gesamtmenge des partikulären, amorphen Oxids des Bestandteils (a),
wobei vorzugsweise

- das Mikrosilica ein zirkonhaltiges Mikrosilica ist, bevorzugt ein zirkonhaltiges Mikrosilica, wie es bei der Herstellung von Zirkonoxid im Lichtbogenprozess als Nebenprodukt anfällt,
und/oder
- eine Dispersion des partikulären, amorphen Oxids des Bestandteils (a) in destilliertem Wasser mit einer Konzentration des partikulären, amorphen Oxids des Bestandteils (a) von 10 Gew.-%, bezogen auf die Gesamtmasse der Dispersion, einen pH-Wert von kleiner 7, bevorzugt von kleiner 6,5 besitzt
und/oder
- die gewichtsmittlere Größe der Primärpartikel des Mikrosilica im Bereich von 100 nm bis 150 nm liegt.

**5.** Verwendung nach einem der vorangehenden Ansprüche, wobei die Partikel des partikulären, amorphen Oxids des Bestandteils (a) eine puzzolanische Aktivität besitzen.

**6.** Verwendung nach einem der vorangehenden Ansprüche,

wobei die Schlichtezusammensetzung eine Gesamtmenge im Bereich von 4 bis 25 Gew-% partikuläres, amorphes Oxid des Bestandteils (a) umfasst, bezogen auf die Gesamtmasse der Schlichtezusammensetzung, bevorzugt eine Gesamtmenge im Bereich von 4 bis 20 Gew.-%
und/oder
wobei der Gesamtanteil an partikulären, amorphen Oxiden des Bestandteils (a) kleiner ist als 50 Gew.-%, bezogen auf die Gesamtmenge der Feuerfeststoffe in der Schlichtezusammensetzung, vorzugsweise kleiner ist als 25 Gew.-%.

**7.** Verwendung nach einem der vorangehenden Ansprüche, wobei die Schlichtezusammensetzung

eine oder mehrere oberflächenaktive Substanzen umfasst, vorzugsweise einen oder mehrere Schaumbildner, vorzugsweise einen oder mehrere Schaumbildner ausgewählt aus der Gruppe bestehend aus anionischen, kationischen und nichtionischen Schaumbildnern,
bevorzugt ein oder mehr anionische und/oder ein oder mehr kationische Schaumbildner,
wobei vorzugsweise der Gesamtanteil an anionischen und kationischen Schaumbildnern kleiner ist als 0,5 Gew.-%, bezogen auf die Gesamtmasse der Schlichtezusammensetzung,
besonders vorzugsweise der Gesamtanteil an Schaumbildnern ausgewählt aus der Gruppe bestehend aus anionischen, kationischen und nichtionischen Schaumbildnern kleiner ist als 0,5 Gew.-%, bezogen auf die Gesamtmasse der Schlichtezusammensetzung,
ganz besonders vorzugsweise der Gesamtanteil an Schaumbildnern kleiner ist als 0,5 Gew.-%, bezogen auf die Gesamtmasse der Schlichtezusammensetzung.

**8.** Verwendung nach einem der vorangehenden Ansprüche,

wobei der Anteil an kristallinem Siliziumdioxid kleiner ist als 3 Gew.-%, bezogen auf die Gesamtmasse der Schlichtezusammensetzung
und/oder
wobei der Gesamtanteil an Zirkonsilikaten und Zirkonoxid kleiner ist als 7 Gew.-%, bezogen auf die Gesamtmasse der Schlichtezusammensetzung
und/oder
wobei der Anteil an Korund kleiner ist als 5 Gew.-%, bezogen auf die Gesamtmasse der Schlichtezusammensetzung
und/oder
wobei der Anteil an Feuerfeststoffen mit einer Mohs-Härte von mehr als 7 kleiner ist als 5 Gew.-%, bezogen auf die Gesamtmasse der Schlichtezusammensetzung
und/oder
wobei der Anteil an Diatomeenerde kleiner ist als 10 Gew.-%, bezogen auf die Gesamtmenge des partikulären, amorphen Oxids des Bestandteils (a).

**9.** Verwendung nach einem der vorangehenden Ansprüche, wobei die Schlichtezusammensetzung ein anorganisches Bindemittel umfasst, das vorzugsweise ausgewählt ist aus der Gruppe bestehend aus Phosphaten, Wassergläsern, Kieselsolen und deren Mischungen,

wobei die Wassergläser vorzugsweise ausgewählt sind aus der Gruppe bestehend aus Alkaliwassergläsern
und/oder
wobei die Phosphate vorzugsweise ausgewählt sind aus der Gruppe bestehend aus Orthophosphaten, Polyphosphaten und deren Mischungen, besonders vorzugsweise aus der Gruppe bestehend aus Orthophosphaten, Metaphosphaten und deren Mischungen, ganz besonders vorzugsweise aus der Gruppe bestehend aus Aluminiumphosphaten, Polyphosphaten und deren Mischungen, am bevorzugtesten aus der Gruppe bestehend aus Aluminiumphosphaten, Metaphosphaten und deren Mischungen,
und/oder
wobei das gewichtsmittlere Molekulargewicht $M_W$ der Phosphate vorzugsweise größer ist als 300 g/mol, besonders vorzugsweise größer ist als 600 g/mol.

10. Verwendung nach einem der vorangehenden Ansprüche, wobei die Schlichtezusammensetzung

ein oder mehrere rheologische Additive umfasst, vorzugsweise Verdickungsmittel, besonders vorzugsweise organische Verdickungsmittel, bevorzugt ausgewählt aus der Gruppe bestehend aus Polysacchariden, Proteinen und Celluloseethern, oder anorganische Verdickungsmittel, bevorzugt ausgewählt aus der Gruppe bestehend aus Tonmineralien wie Bentonite, Smectite, Attapulgite und Montmorillonite,
und/oder
ein oder mehrere Biozide umfasst, vorzugsweise ein oder mehrere Bakterizide
und/oder
wobei die Schlichtezusammensetzung ein oder mehrere rheologische Additive umfasst, vorzugsweise Verdickungsmittel, besonders vorzugsweise organische Verdickungsmittel, bevorzugt ausgewählt aus der Gruppe bestehend aus Polysacchariden, Proteinen und Celluloseethern, oder anorganische Verdickungsmittel, bevorzugt ausgewählt aus der Gruppe bestehend aus Tonmineralien wie Bentonite, Smectite, Attapulgite und Montmorillonite,

wobei der Anteil an Bentoniten oder Smectiten oder Attapulgiten oder Montmorilloniten, bevorzugt der Gesamtanteil an Tonmineralien wie Bentonite, Smectite, Attapulgite und Montmorillonite, besonders bevorzugt der Gesamtanteil an anorganischen Verdickungsmitteln, ganz besonders bevorzugt der Gesamtanteil an rheologischen Additiven
kleiner ist als 6 Gew.-%, bezogen auf die Gesamtmasse des Feststoffanteils der Schlichtezusammensetzung, vorzugsweise kleiner ist als 3 Gew.-%, besonders vorzugsweise kleiner ist als 1,5 Gew.-%
und/oder
so ausgewählt ist, dass dieser Anteil einen Glühverlust von weniger als 0,5 Gew.-% besitzt, bezogen auf die Gesamtmasse des Feststoffanteils der Schlichtezusammensetzung, bevorzugt einen Glühverlust von weniger als 0,4 Gew.-%, besonders bevorzugt von weniger als 0,3 Gew.-%

und/oder
wobei die Schlichtezusammensetzung in der wässrigen Phase einen Alkohol mit einem Siedepunkt von weniger als 100 °C bei 1013 hPa umfasst, vorzugsweise in der wässrigen Phase Ethanol umfasst.

11. Verwendung nach einem der vorangehenden Ansprüche, wobei der eine oder die mehreren weiteren Feuerfeststoffe des Bestandteils (b) einen oder mehrere Bestandteile umfassen, ausgewählt aus der Gruppe bestehend aus

- Hohlpartikel, die eine Sphärizität von größer als 0,9 besitzen, bestimmt durch Auswertung zweidimensionaler mikroskopischer Bilder, vorzugsweise Hohlpartikel (i) mit kristallinen Anteilen sowie vorzugsweise (ii) umfassend Siliziumdioxid oder Silikat,
wobei der Anteil an diesen Hohlpartikeln im Bereich von 0,1 bis 10 Gew.-% liegt, vorzugsweise im Bereich von 0,5 bis 6 Gew.-%, bezogen auf die Gesamtmasse der Schlichtezusammensetzung,
- keramische Partikel, die eine Sphärizität von größer als 0,9 besitzen, bestimmt durch Auswertung zweidimensionaler mikroskopischer Bilder, vorzugsweise keramische Partikel (i) mit kristallinen Anteilen und/oder (ii) umfassend ein oder mehrere Oxide vorzugsweise ausgewählt aus der Gruppe bestehend aus Aluminiumoxid, Siliziumdioxid, Zirkonoxid und Calciumoxid,

besonders bevorzugt Vollpartikel und/oder Hohlkugeln, ganz besonders bevorzugt Cenosphären.

12. Verwendung nach einem der vorangehenden Ansprüche, wobei eine Schlichtezusammensetzung eingesetzt wird

mit einem Feststoffanteil von mehr als 69 Gew.-%, bezogen auf die Gesamtmasse der Schlichtezusammensetzung,
und
mit einem Glühverlust von weniger als 0,6 Gew.-%, bevorzugt weniger als 0,5 Gew.-%, besonders bevorzugt weniger als 0,3 Gew.-%, bezogen auf die Gesamtmasse des Feststoffanteils der Schlichtezusammensetzung, wobei die Schlichtezusammensetzung eine Dispersion von Feuerfeststoffen in einer wässrigen Phase ist, wobei die Feuerfeststoffe zumindest umfassen

(a)

- eine Gesamtmenge im Bereich von 4 bis 50 Gew.-% partikuläres, amorphes Oxid, bezogen auf die

Gesamtmasse der Schlichtezusammensetzung,

wobei das partikuläre, amorphe Oxid einen Anteil von 85 Gew.-% oder mehr Siliziumdioxid, vorzugsweise Mikrosilica, umfasst, bezogen auf die Gesamtmenge des partikulären, amorphen Oxids,
wobei das partikuläre, amorphe Oxid einen massenbezogenen Wert $D_{95}$ von kleiner als 5 μm, vorzugsweise kleiner als 3 μm, besonders vorzugsweise kleiner als 2 μm, ganz besonders vorzugsweise kleiner als 1 μm besitzt, bestimmt mittels Laserbeugung,
wobei das partikuläre, amorphe Oxid eine Porosität von kleiner als 50%, vorzugsweise kleiner als 25%, besonders vorzugsweise kleiner als 10% besitzt, bezogen auf die Gesamtmenge des partikulären amorphen Oxids, und
wobei 90 Gew.-% oder mehr der Partikel des partikulären, amorphen Oxids eine Sphärizität von größer als 0,9, vorzugsweise größer als 0,95 besitzen, bestimmt durch Auswertung zweidimensionaler mikroskopischer Bilder,

oder
- eine Gesamtmenge im Bereich von 4 bis 50 Gew.-% Mikrosilica als partikuläres, amorphes Oxid, bezogen auf die Gesamtmasse der Schlichtezusammensetzung,

und
(b) einen oder mehrere weitere Feuerfeststoffe,

wobei die Schlichtezusammensetzung umfasst:

- eine oder mehrere oberflächenaktive Substanzen,
- ein anorganisches Bindemittel, und
- ein oder mehrere rheologische Additive.

**13.** Verwendung nach einem der vorangehenden Ansprüche, wobei der Feststoffanteil der Schlichtezusammensetzung im Bereich von mehr als 69 Gew.-% bis maximal 80 Gew.-% liegt, bezogen auf die Gesamtmasse der Schlichtezusammensetzung,
wobei der Feststoffanteil der Schlichtezusammensetzung bevorzugt im Bereich von mehr als 69 Gew.-% bis maximal 75 Gew.-% liegt, bezogen auf die Gesamtmasse der Schlichtezusammensetzung, besonders bevorzugt im Bereich von mehr als 69 Gew.-% bis 73 Gew-%.

**14.** Verwendung nach einem der vorangehenden Ansprüche,

wobei der Schlichteüberzug auf der Innenwandung der Schleudergusskokille eine Negativstruktur besitzt, für die Herstellung eines metallischen Gussstücks mit strukturierter Oberfläche
und/oder
wobei der Sprühauftrag zumindest in Bereichen der Innenwandung zwei- oder mehrschichtig erfolgt, wobei der Auftrag der zweiten oder zumindest einer der weiteren Schichten auf eine zuvor aufgetragene, vorzugsweise nicht vollständig getrocknete Schicht des Schlichteüberzugs erfolgt.

**15.** Verfahren zur Herstellung einer innenwandig mit einem Schlichteüberzug versehenen Schleudergusskokille zur Verwendung im Schleudergussverfahren, mit den Schritten:

- Bereitstellen oder Herstellen einer Schlichtezusammensetzung wie in einem der Ansprüche 1 bis 13 definiert,
- Applizieren einer oder mehrerer Schichten der bereitgestellten oder hergestellten Schlichtezusammensetzung auf die Innenwandung der Schleudergusskokille, vorzugsweise bei rotierender und/oder erhitzter Schleudergusskokille, wobei vorzugsweise der resultierende Schlichteüberzug zumindest nach dem Trocknen eine Negativstruktur für die Herstellung eines Gussstücks mit strukturierter Oberfläche besitzt.

**16.** Verfahren zur Herstellung eines Gussstücks im Schleudergussverfahren, umfassend die Schritte:

- Bereitstellen oder Herstellen einer Schlichtezusammensetzung wie in einem der Ansprüche 1 bis 12 definiert,
- Applizieren einer oder mehrerer Schichten der bereitgestellten oder hergestellten Schlichtezusammensetzung auf die Innenwandung einer Schleudergusskokille zur Herstellung eines Schlichteüberzugs,

- Einfüllen des Gussmetalls in die innenwandig beschichtete und rotierende Schleudergusskokille,
- Erstarrenlassen des Gussstücks in der rotierenden Schleudergusskokille,
- Extrahieren des Gussstücks aus der Schleudergusskokille, vorzugsweise zusammen mit dem Schlichteüberzug oder mit Teilen des Schlichteüberzugs,

wobei das Applizieren vorzugsweise bei rotierender und/oder erhitzter Schleudergusskokille erfolgt
und
wobei vorzugsweise der Schlichteüberzug zumindest nach dem Trocknen eine Negativstruktur für die Herstellung eines Gussstücks mit strukturierter Oberfläche und das Gussstück eine entsprechende strukturierte Oberfläche besitzt.

**17.** Schleudergusskokille zur Verwendung im Schleudergussverfahren, mit einem Schlichteüberzug auf der Innenwandung der Schleudergusskokille,

wobei der Schlichteüberzug aus einer Schlichtezusammensetzung besteht wie in einem der Ansprüche 1 bis 13 definiert, die getrocknet ist,

wobei vorzugsweise der Schlichteüberzug aus den bei 1013 hPa und einer Temperatur von 105 °C, vorzugsweise 200 °C, nicht verdampfbaren Bestandteilen einer Schlichtezusammensetzung besteht wie in einem der Ansprüche 1 bis 10 definiert
und/oder
wobei vorzugsweise der Schlichteüberzug eine Negativstruktur für die Herstellung eines Gussstücks mit strukturierter Oberfläche besitzt

und/oder
wobei die Schleudergusskokille herstellbar ist nach dem Verfahren gemäß Anspruch 15
und/oder
wobei die Schleudergusskokille herstellbar ist gemäß der Verwendung nach einem der Ansprüche 1 bis 14.

## Claims

**1.** Use of a refractory coating composition

having a solids fraction of more than 69 wt%, based on the total mass of the refractory coating composition, and having a loss on ignition of less than 0.6 wt%, based on the total mass of the solids fraction of the refractory coating composition,
wherein the refractory coating composition is a dispersion of refractories in an aqueous phase, the refractories at least comprising

(a)

- a total amount in the range from 4 to 50 wt% of particulate amorphous oxide, based on the total mass of the refractory coating composition,

wherein the particulate amorphous oxide comprises a fraction of 85 wt% or more of silicon dioxide, based on the total amount of the particulate amorphous oxide,
wherein the particulate amorphous oxide possesses a mass-based $D_{95}$ of less than 5 $\mu$m, determined by laser diffraction,
wherein the particulate amorphous oxide possesses a porosity of less than 50%, based on the total amount of the particulate amorphous oxide, and
wherein 90 wt% or more of the particles of the particulate amorphous oxide possess a sphericity of greater than 0.9, determined by evaluating two-dimensional microscope images,

or
- a total amount in the range from 4 to 50 wt% of microsilica as particulate amorphous oxide, based on the total mass of the refractory coating composition, and

(b) one or more further refractories,

wherein 98 wt% or more of the total mass of the refractories are capable of passing through a sieve having a mesh size of 0.75 mm,
for producing a coating on the basis of a refractory coating on the inner walls of a centrifugal casting mould by means of a spray application.

**2.** Use according to Claim 1,

wherein the particulate amorphous oxide of constituent (a) possesses a loss on ignition of less than 0.6 wt%, based on the total amount of the particulate amorphous oxide of constituent (a), preferably a loss on ignition of less than 0.5 wt%, more preferably of less than 0.3 wt%,
and/or
wherein

- the refractory coating composition comprises (i) zirconium oxide, (ii) carbon and/or (iii) a Lewis acid, preferably as secondary constituents from the preparation of the particulate amorphous oxide of constituent (a),
and/or
- the particulate amorphous oxide of constituent (a) comprises a fraction of 90 wt% of silicon dioxide or more, preferably 95 wt% or more of silicon dioxide, based in each case on the total amount of the particulate amorphous oxide of constituent (a).

**3.** Use according to either of the preceding claims, wherein

90 wt% or more of the particles of the particulate amorphous oxide of constituent (a) possess a sphericity of greater than 0.95, determined by evaluating two-dimensional microscope images,
and/or
wherein the particulate amorphous oxide of constituent (a) possesses a mass-based $D_{95}$ of less than 3 $\mu$m, preferably less than 2 $\mu$m, more preferably less than 1 $\mu$m, determined by laser diffraction.

**4.** Use according to any of the preceding claims,

wherein the particulate amorphous oxide of constituent (a) comprises one or more constituents selected from the group consisting of

- silicon dioxide particles which are preparable by spraying a silicon dioxide melt, and
- microsilica,

preferably a total fraction of 85 wt% or more of one or all of these constituents, more preferably 90 wt% or more, very preferably 95 wt% or more, based in each case on the total amount of the particulate amorphous oxide of constituent (a)
and/or
wherein the particulate amorphous oxide of constituent (a) comprises a fraction of 85 wt% or more of microsilica, preferably a fraction of 90 wt% or more, more preferably a fraction of 95 wt% or more, based in each case on the total amount of the particulate amorphous oxide of constituent (a),
wherein preferably

- the microsilica is a zirconium-containing microsilica, preferably a zirconium-containing microsilica as obtained as a secondary product in the production of zirconium oxide in an electric arc process, and/or
- a dispersion of the particulate amorphous oxide of constituent (a) in distilled water, with a concentration of the particulate amorphous oxide of constituent (a) of 10 wt%, based on the total mass of the dispersion, possesses a pH of less than 7, preferably of less than 6.5,
and/or
- the weight-average size of the primary particles of the microsilica is in the range from 100 nm to 150 nm.

**5.** Use according to any of the preceding claims,
wherein
the particles of the particulate amorphous oxide of constituent (a) possess a pozzolanic activity.

**6.** Use according to any of the preceding claims,

wherein the refractory coating composition comprises a total amount in the range from 4 to 25 wt% of particulate amorphous oxide of constituent (a), based on the total mass of the refractory coating composition, preferably a total amount in the range from 4 to 20 wt%
and/or
wherein the total fraction of particulate amorphous oxides of constituent (a) is less than 50 wt%, based on the total amount of the refractories in the refractory coating composition, preferably less than 25 wt%.

**7.** Use according to any of the preceding claims,

wherein the refractory coating composition
comprises one or more surface-active substances, preferably one or more foam formers, preferably one or more foam formers selected from the group consisting of anionic, cationic and nonionic foam formers,
more preferably one or more anionic and/or one or more cationic foam formers,
wherein preferably the total fraction of anionic and cationic foam formers is less than 0.5 wt%, based on the total mass of the refractory coating composition,
more preferably the total fraction of foam formers selected from the group consisting of anionic, cationic and nonionic foam formers is less than 0.5 wt%, based on the total mass of the refractory coating composition,
very preferably the total fraction of foam formers is less than 0.5 wt%, based on the total mass of the refractory coating composition.

**8.** Use according to any of the preceding claims,

wherein the fraction of crystalline silicon dioxide is less than 3 wt%, based on the total mass of the refractory coating composition,
and/or
wherein the total fraction of zirconium silicates and zirconium oxide is less than 7 wt%, based on the total mass of the refractory coating composition,
and/or
wherein the fraction of $\alpha$-alumina is less than 5 wt%, based on the total mass of the refractory coating composition,
and/or
wherein the fraction of refractories having a Mohs hardness of more than 7 is less than 5 wt%, based on the total mass of the refractory coating composition,
and/or
wherein the fraction of diatomaceous earth is less than 10 wt%, based on the total amount of the particulate amorphous oxide of constituent (a).

**9.** Use according to any of the preceding claims, wherein the refractory coating composition comprises an inorganic binder which is preferably selected from the group consisting of phosphates, waterglasses, silica sols and mixtures thereof,

wherein the waterglasses are preferably selected from the group consisting of alkali metal waterglasses
and/or
wherein the phosphates are preferably selected from the group consisting of orthophosphates, polyphosphates and mixtures thereof, more preferably from the group consisting of orthophosphates, metaphosphates and mixtures thereof, very preferably from the group consisting of aluminium phosphates, polyphosphates and mixtures thereof, most preferably from the group consisting of aluminium phosphates, metaphosphates and mixtures thereof,
and/or
wherein the weight-average molecular weight $M_W$ of the phosphates is preferably greater than 300 g/mol, more preferably greater than 600 g/mol.

**10.** Use according to any of the preceding claims,

wherein the refractory coating composition
comprises one or more rheological additives, preferably thickeners, more preferably organic thickeners, preferably selected from the group consisting of polysaccharides, proteins and cellulose ethers, or inorganic

thickeners, preferably selected from the group consisting of clay minerals such as bentonites, smectites, attapulgites and montmorillonites,
and/or
comprises one or more biocides, preferably one or more bactericides,
and/or
wherein the refractory coating composition comprises one or more rheological additives, preferably thickeners, more preferably organic thickeners, preferably selected from the group consisting of polysaccharides, proteins and cellulose ethers, or inorganic thickeners, preferably selected from the group consisting of clay minerals such as bentonites, smectites, attapulgites and montmorillonites,
wherein the fraction of bentonites or smectites or attapulgites or montmorillonites, preferably the total fraction of clay minerals such as bentonites, smectites, attapulgites and montmorillonites, more preferably the total fraction of inorganic thickeners, very preferably the total fraction of rheological additives,
is less than 6 wt%, based on the total mass of the solids fraction of the refractory coating composition, preferably less than 3 wt%, more preferably less than 1.5 wt%,
and/or
is selected such that this fraction possesses a loss on ignition of less than 0.5 wt%, based on the total mass of the solids fraction of the refractory coating composition, preferably a loss on ignition of less than 0.4 wt%, more preferably of less than 0.3 wt%,
and/or
wherein the refractory coating composition comprises in the aqueous phase an alcohol having a boiling point of less than 100°C at 1013 hPa, and preferably comprises ethanol in the aqueous phase.

**11.** Use according to any of the preceding claims, wherein the one or more further refractories of constituent (b) comprise one or more constituents selected from the group consisting of

- hollow particles which possess a sphericity of greater than 0.9, determined by evaluating two-dimensional microscope images, preferably hollow particles (i) having crystalline fractions and also preferably (ii) comprising silicon dioxide or silicate, wherein the fraction of these hollow particles is in the range from 0.1 to 10 wt%, preferably in the range from 0.5 to 6 wt%, based on the total mass of the refractory coating composition,
- ceramic particles which possess a sphericity of greater than 0.9, determined by evaluating two-dimensional microscope images, preferably ceramic particles (i) having crystalline fractions and/or (ii) comprising one or more oxides preferably selected from the group consisting of aluminium oxide, silicon dioxide, zirconium oxide and calcium oxide,

more preferably solid particles and/or hollow spheres, very preferably cenospheres.

**12.** Use according to any of the preceding claims, wherein a refractory coating composition is used

having a solids fraction of more than 69 wt%, based on the total mass of the refractory coating composition, and
having a loss on ignition of less than 0.6 wt%, preferably less than 0.5 wt%, more preferably less than 0.3 wt%, based on the total mass of the solids fraction of the refractory coating composition,
wherein the refractory coating composition is a dispersion of refractories in an aqueous phase, the refractories at least comprising

(a)

- a total amount in the range from 4 to 50 wt% of particulate amorphous oxide, based on the total mass of the refractory coating composition,

wherein the particulate amorphous oxide comprises a fraction of 85 wt% or more of silicon dioxide, preferably microsilica, based on the total amount of the particulate amorphous oxide,
wherein the particulate amorphous oxide possesses a mass-based $D_{95}$ of less than 5 μm, preferably less than 3 μm, more preferably less than 2 μm, very preferably less than 1 μm, determined by laser diffraction,
wherein the particulate amorphous oxide possesses a porosity of less than 50%, preferably less than 25%, more preferably less than 10%, based on the total amount of the particulate amorphous oxide, and

wherein 90 wt% or more of the particles of the particulate amorphous oxide possess a sphericity of greater than 0.9, preferably greater than 0.95, determined by evaluating two-dimensional microscope images,

or
- a total amount in the range from 4 to 50 wt% of microsilica as particulate amorphous oxide, based on the total mass of the refractory coating composition,

and
(b) one or more further refractories,

wherein the refractory coating composition comprises:

- one or more surface-active substances,
- an inorganic binder, and
- one or more rheological additives.

**13.** Use according to any of the preceding claims, wherein the solids fraction of the refractory coating composition is in the range from more than 69 wt% to a maximum of 80 wt%, based on the total mass of the refractory coating composition, wherein the solids fraction of the refractory coating composition is preferably in the range from more than 69 wt% to a maximum of 75 wt%, based on the total mass of the refractory coating composition, more preferably in the range from more than 69 wt% to 73 wt%.

**14.** Use according to any of the preceding claims,

wherein the coating on the basis of a refractory coating on the inner walls of the centrifugal casting mould possesses a negative structure, for producing a metallic casting having a structured surface
and/or
wherein the spray application at least in regions of the inner walls is made in two or more coats, the application of the second or at least one of the further coats taking place onto a previously applied, preferably not fully dried coat of the coating on the basis of a refractory coating.

**15.** Method for producing a centrifugal casting mould provided on its inner walls with a coating on the basis of a refractory coating, for use in the centrifugal casting process, having the following steps:

- providing or producing a refractory coating composition as defined in any of Claims 1 to 13,
- applying one or more coats of the provided or produced refractory coating composition to the inner walls of the centrifugal casting mould, preferably with the centrifugal casting mould rotating and/or heated, where preferably the resulting coating on the basis of a refractory coating at least after drying possesses a negative structure for producing a casting having a structured surface.

**16.** Method for producing a casting in the centrifugal casting process, comprising the steps of:

- providing or producing a refractory coating composition as defined in any of Claims 1 to 12,
- applying one or more coats of the provided or produced refractory coating composition to the inner walls of a centrifugal casting mould, to produce a coating on the basis of a refractory coating,
- introducing the casting metal into the rotating centrifugal casting mould whose inner walls have been coated,
- solidifying the casting in the rotating centrifugal casting mould,
- extracting the casting from the centrifugal casting mould, preferably together with the coating on the basis of a refractory coating or with parts of the coating on the basis of a refractory coating,
wherein the applying takes place preferably with the centrifugal casting mould rotating and/or heated,
and
wherein preferably the coating on the basis of a refractory coating at least after drying possesses a negative structure for producing a casting having a structured surface, and the casting possesses a corresponding structured surface.

**17.** Centrifugal casting mould for use in the centrifugal casting process, having a coating on the basis of a refractory coating on the inner walls of the centrifugal casting mould,

wherein the coating on the basis of a refractory coating consists of a refractory coating composition as defined in any of Claims 1 to 13 that has dried,
wherein preferably the coating on the basis of a refractory coating consists of those constituents of a refractory coating composition as defined in any of Claims 1 to 10 that are not vaporizable at 1013 hPa and a temperature of 105°C, preferably 200°C,
and/or
wherein preferably the coating on the basis of a refractory coating possesses a negative structure for producing a casting having a structured surface,
and/or
wherein the centrifugal casting mould is producible by the method according to Claim 15,
and/or
wherein the centrifugal casting mould is producible according to the use according to any of Claims 1 to 14.

## Revendications

**1.** Utilisation d'une composition de poteyage

avec une teneur en matières solides supérieure à 69 % en poids, par rapport à la masse totale de la composition de poteyage,
et
avec une perte par calcination inférieure à 0,6 % en poids, par rapport à la masse totale de la teneur en matières solides de la composition de poteyage,
dans laquelle la composition de poteyage est une dispersion de matières réfractaires dans une phase aqueuse, dans laquelle les matières réfractaires comprennent au moins

(a)

- une quantité totale dans la plage de 4 à 50 % en poids d'oxyde amorphe particulaire, par rapport à la masse totale de la composition de poteyage,

dans laquelle l'oxyde amorphe particulaire comprend une proportion de 85 % en poids ou plus de dioxyde de silicium, par rapport à la quantité totale de l'oxyde amorphe particulaire,
dans laquelle l'oxyde amorphe particulaire possède une valeur rapportée à la masse $D_{95}$ inférieure à 5 $\mu$m, définie au moyen d'une diffraction laser,
dans laquelle l'oxyde amorphe particulaire possède une porosité inférieure à 50 % par rapport à la quantité totale de l'oxyde amorphe particulaire, et
dans laquelle 90 % en poids ou plus des particules de l'oxyde amorphe particulaire possèdent une sphéricité supérieure à 0,9, définie par évaluation d'images microscopiques bidimensionnelles,

ou
- une quantité totale dans la plage de 4 à 50 % en poids de microsilice en tant qu'oxyde amorphe particulaire, par rapport à la masse totale de la composition de poteyage,

et
(b) une ou plusieurs autres matières réfractaires,

dans laquelle 98 % en poids ou plus de la masse totale des matières réfractaires sont adaptés pour traverser un tamis avec une largeur de maille de 0,75 mm,
pour fabriquer un revêtement de poteyage sur la paroi intérieure d'une coquille de coulée centrifuge au moyen d'une application par pulvérisation.

**2.** Utilisation selon la revendication 1,

dans laquelle l'oxyde amorphe particulaire du constituant (a) possède une perte par calcination inférieure à 0,6 % en poids, par rapport à la quantité totale de l'oxyde amorphe particulaire du constituant (a), de manière préférée une perte par calcination inférieure à 0,5 % en poids, de manière particulièrement préférée inférieure à 0,3 % en poids

et/ou
dans laquelle

- la composition de poteyage comprend (i) de l'oxyde de zirconium, (ii) du carbone et/ou (iii) un acide de Lewis, de préférence en tant que constituants secondaires issus de la fabrication de l'oxyde amorphe particulaire du constituant (a),
et/ou
- l'oxyde amorphe particulaire du constitant (a) comprend une teneur de 90 % en poids ou plus de dioxyde de silicium, de préférence de 95 % en poids ou plus de dioxyde de silicium, respectivement par rapport à la quantité totale de l'oxyde amorphe particulaire du constituant (a).

**3.** Utilisation selon l'une quelconque des revendications précédentes, dans laquelle 90 % en poids ou plus des particules de l'oxyde amorphe particulaire du constituant (a) possèdent une sphéricité supérieure à 0,95, définie par évaluation d'images microscopiques bidimensionnelles
et/ou
dans laquelle l'oxyde amorphe particulaire du constituant (a) possède une valeur rapportée à la masse $D_{95}$ inférieure à 3 $\mu$m, de préférence inférieure à 2 $\mu$m, en particulier de préférence inférieure à 1 $\mu$m, définie au moyen d'une diffraction laser.

**4.** Utilisation selon l'une quelconque des revendications précédentes,

dans laquelle l'oxyde amorphe particulaire du constituant (a) comprend un ou plusieurs constituants choisis parmi le groupe constitué de

- particules de dioxyde de silicium, qui peuvent être fabriquées par pulvérisation d'une matière fondue de dioxyde de silicium, et
- microsilice,

de préférence une teneur totale de 85 % en poids ou plus d'un ou de tous ces constituants, de manière préférée 90 % en poids ou plus, de manière particulièrement préférée 95 % en poids ou plus, respectivement par rapport à la quantité totale de l'oxyde amorphe particulaire du constituant (a)
et/ou
dans laquelle l'oxyde amorphe particulaire du constituant (a) comprend une teneur de 85 % en poids ou plus de microsilice, de manière préférée une teneur de 90 % en poids ou plus, de manière particulièrement préférée une teneur de 95 % en poids ou plus, respectivement par rapport à la quantité totale de l'oxyde amorphe particulaire du constituant (a),
dans laquelle de préférence

- la microsilice est une microsilice contenant du zircon, de manière préférée une microsilice contenant du zircon, telle qu'elle se forme lors de la fabrication d'oxyde de zirconium dans le processus d'arc électrique en tant que produit secondaire,
et/ou
- une dispersion de l'oxyde amorphe particulaire du constituant (a) dans de l'eau distillée avec une concentration de l'oxyde amorphe particulaire du constituant (a) de 10 % en poids, par rapport à la masse totale de la dispersion, possède une valeur pH inférieure à 7, de manière préférée inférieure à 6,5
et/ou
- la taille moyenne en poids des particules primaires de la microsilice se situe dans la plage de 100 nm à 150 nm.

**5.** Utilisation selon l'une quelconque des revendications précédentes, dans laquelle
les particules de l'oxyde amorphe particulaire du constituant (a) possèdent une activité pouzzolanique.

**6.** Utilisation selon l'une quelconque des revendications précédentes,

dans laquelle la composition de poteyage comprend une quantité totale dans la plage de 4 à 25 % en poids d'oxyde amorphe particulaire du constituant (a), par rapport à la masse totale de la composition de poteyage, de manière préférée une quantité totale dans la plage de 4 à 20 % en poids
et/ou

dans laquelle la teneur totale d'oxydes amorphes particulaires du constituant (a) est inférieure à 50 % en poids, par rapport à la quantité totale des matières réfractaires dans la composition de poteyage, de préférence est inférieure à 25 % en poids.

**7.** Utilisation selon l'une quelconque des revendications précédentes, dans laquelle la composition de poteyage

comprend une ou plusieurs substances tensioactives, de préférence un ou plusieurs agents moussants, de préférence un ou plusieurs agents moussants choisis parmi le groupe constitué d'agents moussants anioniques, cationiques et non ioniques,
de manière préférée un ou plusieurs agents moussants anioniques et/ou un ou plusieurs agents moussants cationiques,
dans laquelle, de préférence, la teneur totale en agents moussants anioniques et cationiques est inférieure à 0,5 % en poids, par rapport à la masse totale de la composition de poteyage,
en particulier de préférence, la teneur totale en agents moussants choisis parmi le groupe constitué d'agents moussants anioniques, cationiques et non ioniques est inférieure à 0,5 % en poids, par rapport à la masse totale de la composition de poteyage,
de préférence tout particulièrement, la teneur totale en agents moussants est inférieure à 0,5 % en poids, par rapport à la masse totale de la composition de poteyage.

**8.** Utilisation selon l'une quelconque des revendications précédentes,

dans laquelle la teneur en dioxyde de silicium cristallin est inférieure à 3 % en poids, par rapport à la masse totale de la composition de poteyage
et/ou
dans laquelle la teneur totale en silicates de zirconium et en oxyde de zirconium est inférieure à 7 % en poids, par rapport à la masse totale de la composition de poteyage
et/ou
dans laquelle la teneur en corindon est inférieure à 5 % en poids, par rapport à la masse totale de la composition de poteyage
et/ou
dans laquelle la teneur en matières réfractaires avec une dureté Mohs supérieure à 7 est inférieure à 5 % en poids, par rapport à la masse totale de la composition de poteyage
et/ou
dans laquelle la teneur en terre de diatomées est inférieure à 10 % en poids, par rapport à la quantité totale de l'oxyde amorphe particulaire du constituant (a).

**9.** Utilisation selon l'une quelconque des revendications précédentes, dans laquelle la composition de poteyage comprend un liant inorganique, qui est choisi de préférence parmi le groupe constitué de phosphates, de verres solubles, de sols de silice et de leurs mélanges,

dans laquelle les verres solubles sont de préférence choisis parmi le groupe constitué de verres solubles alcalins
et/ou
dans laquelle les phosphates sont de préférence choisis parmi le groupe constitué d'orthophosphates, de polyphosphates et de leurs mélanges, en particulier de préférence parmi le groupe constitué d'orthophosphates, de métaphosphates et de leurs mélanges, tout particulièrement de préférence parmi le groupe constitué de phosphates d'aluminium, de polyphosphates et de leurs mélanges, idéalement parmi le groupe constitué de phosphates d'aluminium, de métaphosphates et de leurs mélanges,
et/ou
dans laquelle le poids moléculaire moyen en poids $M_W$ des phosphates est de préférence supérieur à 300 g/mol, particulièrement de préférence est supérieur à 600 g/mol.

**10.** Utilisation selon l'une quelconque des revendications précédentes, dans laquelle la composition de poteyage

comprend un ou plusieurs additifs rhéologiques, de préférence des épaississants, en particulier de préférence des épaississants organiques, de préférence choisis parmi le groupe constitué de polysaccharides, de protéines et d'éthers de cellulose, ou d'épaississants inorganiques, de manière préférée choisis parmi le groupe constitué de minéraux argileux comme les bentonites, les smectites, les attapulgites et les montmorillonites,
et/ou

comprend un ou plusieurs biocides, de préférence un ou plusieurs bactéricides
et/ou
dans laquelle la composition de poteyage comprend un ou plusieurs additifs rhéologiques, de préférence des agents épaississants, en particulier de préférence des agents épaississants organiques, de manière préférée choisis parmi le groupe constitué de polysaccharides, de protéines et d'éthers de cellulose, ou des agents épaississants inorganiques, de manière préférée choisis parmi le groupe constitué de minéraux argileux comme les bentonites, les smectites, les attapulgites et les montmorillonites,
dans laquelle la teneur en bentonites ou en smectites ou en attapulgites ou en monmorillonites, de manière préférée la teneur totale en minéraux argileux comme les bentonites, les smectites, les attapulgites et les monmorillonites, de manière particulièrement préférée la teneur totale en agents épaississants inorganiques, de manière particulièrement préférée la teneur totale en additifs rhéologiques
est inférieure à 6 % en poids, par rapport à la masse totale de la teneur en matières solides de la composition de poteyage, de préférence est inférieure à 3 % en poids, en particulier de préférence est inférieure à 1,5 % en poids
et/ou
est choisie de telle sorte que ladite teneur présente une perte par calcination inférieure à 0,5 % en poids, par rapport à la masse totale de la teneur en matières solides de la composition de poteyage, de manière préférée une perte par calcination inférieure à 0,4 % en poids, de manière particulièrement préférée une perte par calcination inférieure à 0,3 % en poids
et/ou
dans laquelle la composition de poteyage comprend, dans la phase aqueuse, un alcool avec un point d'ébullition inférieur à 100 °C à 1013 hPa, de préférence comprend de l'éthanol dans la phase aqueuse.

**11.** Utilisation selon l'une quelconque des revendications précédentes, dans laquelle la ou les plusieurs autres matières réfractaires du constituant (b) comprennent un ou plusieurs constituants choisis parmi le groupe constitué de

- particules creuses, qui possèdent une sphéricité supérieure à 0,9 définie par évaluation d'images microscopiques bidimensionnelles, de préférence des particules creuses (i) avec des teneurs cristallines ainsi que de préférence (ii) comprenant du dioxyde de silicium ou du silicate,
dans laquelle la teneur en lesdites particules creuses se situe dans la plage de 0,1 à 10 % en poids, de préférence dans la plage de 0,5 à 6 % en poids, par rapport à la masse totale de la composition de poteyage,
- particules céramiques, qui possèdent une sphéricité supérieure à 0,9, définie par évaluation d'images microscopiques bidimensionnelles, de préférence de particules céramiques (i) avec des teneurs cristallines et/ou (ii) comprenant un ou plusieurs oxydes de préférence choisis parmi le groupe constitué d'oxyde d'aluminium, de dioxyde de silicium, d'oxyde de zirconium et d'oxyde de calcium,

de manière particulièrement préférée de particules pleines et/ou de billes creuses, de manière très particulièrement préférée de cénosphères.

**12.** Utilisation selon l'une quelconque des revendications précédentes, dans laquelle une composition de poteyage est utilisée

avec une teneur en matières solides supérieure à 69 % en poids, par rapport à la masse totale de la composition de poteyage,
et
avec une perte par calcination inférieure à 0,6 % en poids, de manière préférée inférieure à 0,5 % en poids, de manière particulièrement préférée inférieure à 0,3 % en poids, par rapport à la masse totale de la teneur en matières solides de la composition de poteyage,
dans laquelle la composition de poteyage est une dispersion de matières réfractaires dans une phase aqueuse, dans laquelle les matières réfractaires comprennent au moins

(a)

- une quantité totale dans la plage de 4 à 50 % en poids d'oxyde amorphe particulaire, par rapport à la masse totale de la composition de poteyage,

dans laquelle l'oxyde amorphe particulaire comprend une teneur de 85 % en poids ou plus de dioxyde de silicium, de préférence de microsilice, par rapport à la quantité totale de l'oxyde amorphe particulaire,

dans laquelle l'oxyde amorphe particulaire possède une valeur rapportée à la masse $D_{95}$ inférieure à 5 µm, de préférence inférieure à 3 µm, en particulier de préférence inférieure à 2 µm, tout particulièrement de préférence inférieure à 1 µm, définie au moyen d'une diffraction laser,
dans laquelle l'oxyde amorphe particulaire possède une porosité inférieure à 50 %, de préférence inférieure à 25 %, en particulier de préférence inférieure à 10 %, par rapport à la quantité totale de l'oxyde amorphe particulaire, et
dans laquelle 90 % en poids ou plus des particules de l'oxyde amorphe particulaire possèdent une sphéricité supérieure à 0,9, de préférence supérieure à 0,95, définie par évaluation d'images microscopiques bidimensionnelles,

ou
- une quantité totale dans la plage de 4 à 50 % en poids de microsilice en tant qu'oxyde amorphe particulaire, par rapport à la masse totale de la composition de poteyage,

et
(b) une ou plusieurs autres matières réfractaires,

dans laquelle la composition de poteyage comprend :

- une ou plusieurs substances tensioactives,
- un liant inorganique, et
- un ou plusieurs additifs rhéologiques.

**13.** Utilisation selon l'une quelconque des revendications précédentes, dans laquelle la teneur en matières solides de la composition de poteyage se situe dans la plage de plus de 69 % en poids à 80 % en poids au maximum, par rapport à la masse totale de la composition de poteyage,
dans laquelle la teneur en matières solides de la composition de poteyage se situe de manière préférée dans la plage de plus de 69 % en poids à 75 % en poids au maximum, par rapport à la masse totale de la composition de poteyage, de manière particulièrement préférée dans la plage de plus de 69 % en poids à 73 % en poids.

**14.** Utilisation selon l'une quelconque des revendications précédentes,

dans laquelle le revêtement de poteyage possède une structure négative sur la paroi intérieure de la coquille de coulée centrifuge, pour la fabrication d'une pièce coulée métallique avec une surface structurée
et/ou
dans laquelle l'application par pulvérisation est effectuée en deux couches ou en couches multiples au moins dans des zones de la paroi intérieure, dans laquelle l'application de la deuxième couche ou du moins de l'une des autres couches est effectuée sur une couche appliquée au préalable, de préférence non séchée en totalité, du revêtement de poteyage.

**15.** Procédé de fabrication d'une coquille de coulée centrifuge pourvue du côté de la paroi intérieure d'un revêtement de poteyage destinée à être utilisée dans le procédé de coulée centrifuge, avec les étapes :

- de fourniture ou de fabrication d'une composition de poteyage telle que définie dans l'une quelconque des revendications 1 à 13,
- d'application d'une ou plusieurs couches de la composition de poteyage fournie ou fabriquée sur la paroi intérieure de la coquille de coulée centrifuge, de préférence dans le cas d'une coquille de coulée centrifuge rotative et/ou chauffée, dans lequel de préférence le revêtement de poteyage en résultant possède du moins après le séchage une structure négative pour la fabrication d'une pièce de coulée avec une surface structurée.

**16.** Procédé de fabrication d'une pièce coulée dans le procédé de coulée centrifuge, comprenant les étapes :

- de fourniture ou de fabrication d'une composition de poteyage telle que définie dans l'une quelconque des revendications 1 à 12,
- d'application d'une ou de plusieurs couches de la composition de poteyage fournie ou fabriquée sur la paroi intérieure d'une coquille de coulée centrifuge pour la fabrication d'un revêtement de poteyage,
- de transvasement du métal de coulée dans la coquille de coulée centrifuge revêtue du côté de la paroi intérieure et rotative,

- de solidification de la pièce coulée dans la coquille de coulée centrifuge rotative,
- d'extraction de la pièce coulée hors de la coquille de coulée centrifuge, de préférence conjointement avec le revêtement de poteyage ou avec des parties du revêtement de poteyage,

dans lequel l'application est effectuée de préférence dans le cas d'une coquille de coulée centrifuge rotative et/ou chauffée

et

dans lequel, de préférence, le revêtement de poteyage possède au moins après le séchage une structure négative pour la fabrication d'une pièce coulée avec une surface structurée et la pièce coulée possède une surface structurée correspondante.

**17.** Coquille de coulée centrifuge destinée à être utilisée dans le procédé de coulée centrifuge, avec un revêtement de poteyage sur la paroi intérieure de la coquille de coulée centrifuge,

dans laquelle le revêtement de poteyage est constitué d'une composition de poteyage telle que définie dans l'une quelconque des revendications 1 à 13, qui est séchée,

dans laquelle le revêtement de poteyage est de préférence constitué de constituants non évaporables à 1013 hPa et à une température de 105 °C, de préférence de 200 °C, d'une composition de poteyage telle que définie dans l'une quelconque des revendications 1 à 10

et/ou

dans laquelle le revêtement de poteyage possède de préférence une structure négative pour la fabrication d'une pièce coulée avec une surface structurée

et/ou

dans laquelle la coquille de coulée centrifuge peut être fabriquée selon le procédé selon la revendication 15

et/ou

dans laquelle la coquille de coulée centrifuge peut être fabriquée selon l'utilisation selon l'une quelconque des revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20150122118 A1
- DE 60004770 T2
- US 20020157571 A1
- US 6699314 B2
- EP 1504833 B1
- EP 1902208 B1
- CN 101554643 A
- CN 103817285 A
- EP 1711291 B1
- EP 2422902 A2
- WO 2017184239 A1
- US 20140196863 A1
- EP 2159208 A1
- EP 2281789 A1
- EP 2618338 A2
- EP 2722863 A1
- DE 10339676 A1
- DE 102006046619 A1
- EP 0246181 A1
- WO 2017009216 A1
- WO 2008118023 A1
- DE 1508913 A1
- DE 102017106458 A1
- DE 102017107658 A1


### In der Beschreibung aufgeführte Nicht-Patentliteratur


- *CHEMICAL ABSTRACTS*, 69012-64-2
- **BERND FRIEDE**. *Per Fidjestøl in der Publikation Nachrichten aus der Chemie*, 2011, vol. 59, 956-958
- *CHEMICAL ABSTRACTS*, 93924-19-7